(19) Europäisches Patentamt
European Patent Office
Office européen des brevets

(11) EP 4 219 191 A1

(12) EUROPEAN PATENT APPLICATION
published in accordance with Art. 153(4) EPC

(43) Date of publication:
**02.08.2023 Bulletin 2023/31**

(21) Application number: **21872634.7**

(22) Date of filing: **28.09.2021**

(51) International Patent Classification (IPC):
***B60C 1/00*** (2006.01) ***C08F 8/04*** (2006.01)
***C08F 297/00*** (2006.01) ***C08F 297/04*** (2006.01)
***C08L 53/02*** (2006.01) ***C08K 3/36*** (2006.01)

(52) Cooperative Patent Classification (CPC):
**B60C 1/00; C08F 8/04; C08F 297/00; C08F 297/04; C08K 3/36; C08L 53/02**

(86) International application number:
**PCT/JP2021/035618**

(87) International publication number:
**WO 2022/065509 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2020 JP 2020161660**

(71) Applicant: **Asahi Kasei Kabushiki Kaisha**
**Tokyo 1000006 (JP)**

(72) Inventors:
- **ISHIZAKA, Takanobu**
  **Tokyo 100-0006 (JP)**
- **ARAKI, Yoshifumi**
  **Tokyo 100-0006 (JP)**
- **SEKIKAWA, Shinichi**
  **Tokyo 100-0006 (JP)**
- **SUMITANI, Shogo**
  **Tokyo 100-0006 (JP)**
- **YAMASAKI, Hideki**
  **Tokyo 100-0006 (JP)**
- **YASUMOTO, Atsushi**
  **Tokyo 100-0006 (JP)**

(74) Representative: **Strehl Schübel-Hopf & Partner**
**Maximilianstrasse 54**
**80538 München (DE)**

# (54) BALE-MOLDED ARTICLE

(57) The present invention provides a molded bale of a rubber-like block copolymer, satisfying the following requirements 1 to 6: Requirement 1: a content of a vinyl aromatic monomer unit is 9% by mass or more and 50% by mass or less; Requirement 2: a proportion of a vinyl aromatic monomer block is 3% by mass or more and less than 30% by mass; Requirement 3: an iodine value is 3 to 250; Requirement 4: a proportion of an ethylene structure is 3% by mass or more; Requirement 5: a weight average molecular weight is in a range of 80,000 to 1,000,000; and Requirement 6: at least one block at a molecular end is a specific block I or block II.

EP 4 219 191 A1

## Description

Technical Field

The present invention relates to a molded bale.

Background Art

In recent years, in the fields of rubbers for tire treads, shoe soles, sheets, films, and asphalt modification, a rubber composition using, as a raw material, a molded article containing a rubber-like polymer having an ethylene structure and containing a crosslinkable unsaturated group introduced therein has been proposed for purposes of increasing mechanical strength (see, for example, Patent Documents 1 to 4).

List of Prior Art Documents

Patent Document

Patent Document 1: Japanese Patent Laid-Open No. 2010-270314
Patent Document 2: International Publication No. WO2019/151126
Patent Document 3: International Publication No. WO2019/151127
Patent Document 4: International Publication No. WO2019/078083

Summary of Invention

Problems to be Solved by Invention

A rubber composition using, as a raw material, a molded article containing a rubber-like polymer having an ethylene structure and containing a crosslinkable unsaturated group tends to have, however, low rigidity of the rubber composition and low abrasion resistance to be used as a tire or a shoe outsole. Besides, a hydrogenated product of a rubber-like block copolymer is used as a raw material of a tire in some cases, but when kneading conditions are not precisely set in kneading the hydrogenated product of the rubber-like block copolymer with another tire material, stickiness or kneading failure tends to be caused. According to examinations made by the present inventors, this is probably partly because melting conditions of the rubber-like block copolymer, which is usually molded in a pellet shape, are different from those of another bale-shaped material, but even when the polymer (rubber-like block copolymer) is changed in the shape from the pellet shape to be molded into a bale shape with the structure kept, there is a tendency that the resultant sticks onto a device wall or the like, and hence is difficult to mold.

Therefore, an object of the present invention is to provide a molded bale that is a molded bale of a rubber-like block copolymer easily kneaded with another material (such as a bale-shaped material), and is a molded bale of a rubber-like block copolymer excellent in rigidity and abrasion resistance obtained when formed into a rubber composition with another material mixed.

Means for Solving Problems

The present inventors have made earnest studies to solve the above-described problems of conventional techniques, resulting in finding the following: When a rubber-like block copolymer used in a molded article has a specific structure and a specific molecular weight, the rubber-like block copolymer is easily molded into a molded bale, and in addition, the molded bale of the rubber-like block copolymer is easily kneaded with another material (such as a bale-shaped material), and a rubber composition obtained by kneading the molded bale of the rubber-like block copolymer with another material attains favorable rigidity and abrasion resistance, and thus, the present invention has been accomplished.

Specifically, the present invention provides the following:

[1] A molded bale of a rubber-like block copolymer, satisfying the following requirements 1 to 6:

Requirement 1: a content of a vinyl aromatic monomer unit is 9% by mass or more and 50% by mass or less;
Requirement 2: a proportion of a vinyl aromatic monomer block is 3% by mass or more and less than 30% by mass;

Requirement 3: an iodine value is 3 to 250;
Requirement 4: a proportion of an ethylene structure is 3% by mass or more;
Requirement 5: a weight average molecular weight is in a range of 80,000 to 1,000,000; and
Requirement 6: at least one block at a molecular end is the following block I or block II:

Block I: a block containing an ethylene structure, a conjugated diene structure, and an $\alpha$-olefin structure; and
Block II: a block having a content of a vinyl aromatic monomer unit of 80% by mass or less and containing the vinyl aromatic monomer unit, an ethylene structure, a conjugated diene structure, and an $\alpha$-olefin structure.

[2] The molded bale according to [1], wherein a content of the $\alpha$-olefin structure in the rubber-like block copolymer is 10% by mass or more.
[3] The molded bale according to [1] or [2], wherein the number of vinyl aromatic monomer blocks in the rubber-like block copolymer is 1.
[4] The molded bale according to any of [1] to [3], wherein the rubber-like block copolymer contains a nitrogen atom.
[5] The molded bale according to any of [1] to [4], wherein a modification ratio measured by column adsorption GPC is 40% by mass or more in the rubber-like block copolymer.
[6] The molded bale according to any of [1] to [5], wherein the number of peaks in a gel permeation chromatography (GPC) curve of the rubber-like block copolymer is 1.
[7] The molded bale according to any of [1] to [5], wherein the number of peaks in a gel permeation chromatography (GPC) curve of the rubber-like block copolymer is 2 or more, and a peak area of a peak having a lowest molecular weight is 5% or more and less than 95% of a total peak area.
[8] The molded bale according to any of [1] to [7], wherein a content of the $\alpha$-olefin structure in the rubber-like block copolymer is 40% by mass or less.
[9] The molded bale according to any of [1] to [8], wherein a ratio between a proportion of the vinyl aromatic monomer block and a content of the vinyl aromatic monomer unit in the rubber-like block copolymer (the proportion of the vinyl aromatic monomer block/the content of the vinyl aromatic monomer unit) is 0.28 to 1.00.
[10] The molded bale according to any of [1] to [9], wherein a weight average molecular weight of the vinyl aromatic monomer block in the rubber-like block copolymer is 10,000 or more.
[11] The molded bale of a rubber-like block copolymer according to any of [1] to [10], wherein a residual solvent amount is 5,000 ppm or less, and a water content is 0.05 to 1.5% by mass or less in the molded bale of the rubber-like block copolymer.
[12] A method for producing the molded bale according to any of [1] to [11], comprising:

a step of polymerizing at least a vinyl aromatic monomer and a conjugated diene monomer with an organolithium compound used as a polymerization initiator to obtain a rubber-like block copolymer;
a step of hydrogenating the rubber-like block copolymer to obtain a hydrogenated product of the rubber-like block copolymer; and
a step of molding the hydrogenated product of the rubber-like block copolymer to obtain a molded bale.

[13] The method for producing the molded bale according to [12], comprising a step of adding a vinyl aromatic monomer after copolymerizing a vinyl aromatic monomer and a conjugated diene monomer or after polymerizing a conjugated diene monomer.
[14] The method for producing the molded bale according to [12] or [13], comprising a step of coupling the rubber-like block copolymer using a coupling agent.
[15] A method for producing a rubber composition, comprising a step of kneading a rubber component containing the molded bale of a rubber-like block copolymer according to any of [1] to [11], and 0.1 parts by mass or more and 20 parts by mass or less of a crosslinking agent based on 100 parts by mass of the rubber component.
[16] The method for producing the rubber composition according to [15], wherein the crosslinking agent is at least one selected from the group consisting of an organic peroxide, an azo compound, and a sulfur compound.
[17] The method for producing the rubber composition according to [15] or [16], wherein a filler is kneaded in the step of kneading a crosslinking agent.
[18] The method for producing the rubber composition according to any of [15] to [17], wherein the rubber component contains an additional rubber component in addition to the rubber-like block copolymer.
[19] The method for producing the rubber composition according to [18], wherein the additional rubber component is at least one selected from the group consisting of a polybutadiene rubber, a natural rubber, and an ethylene-vinyl acetate copolymer.
[20] A method for producing a shoe sole, comprising a step of molding the rubber composition obtained by the

method according to any of [15] to [19].
[21] A method for producing a tire tread, comprising a step of molding the rubber composition obtained by the method according to any of [15] to [19].
[22] A method for producing a tire sidewall, comprising a step of molding the rubber composition obtained by the method according to any of [15] to [19].

Advantages of Invention

The present invention can provide a molded bale of a rubber-like block copolymer that is easily kneaded with another material (such as a bale-shaped material), and is excellent in rigidity and abrasion resistance of a rubber composition obtained by kneading with another material.

Mode for Carrying Out Invention

Now, an embodiment for practicing the present invention (hereinafter referred to as the "present embodiment") will be described in detail.
It is noted that the following embodiment is merely illustrative for describing the present invention, and that the present invention is not limited to the following embodiment. The present invention can be practiced with modifications appropriately made within the scope thereof.

[Molded Bale]

A molded bale of the present embodiment is a molded bale of a rubber-like block copolymer satisfying the following requirements 1 to 6:

Requirement 1: A content of a vinyl aromatic monomer unit is 9% by mass or more and 50% by mass or less.
Requirement 2: A proportion of a vinyl aromatic monomer block is 3% by mass or more and less than 30% by mass.
Requirement 3: An iodine value is 3 to 250.
Requirement 4: A proportion of an ethylene structure is 3% by mass or more.
Requirement 5: A weight average molecular weight is in a range of 80,000 to 1,000,000.
Requirement 6: At least one block at a molecular end is the following block I or block II:

Block I: A block containing an ethylene structure, a conjugated diene structure, and an $\alpha$-olefin structure.
Block II: A block having a content of a vinyl aromatic monomer unit of 80% by mass or less and containing the vinyl aromatic monomer unit, an ethylene structure, a conjugated diene structure, and an $\alpha$-olefin structure.

When the molded bale of the present embodiment is a molded bale of a rubber-like block copolymer satisfying the above-described requirements 1 to 6, it is easily kneaded with another material (such as a bale-shaped material), and is excellent in rigidity and abrasion resistance of a rubber composition obtained by kneading with another material.

[Rubber-like Block Copolymer]

The rubber-like block copolymer used in the molded bale of the present embodiment has an iodine value of 3 to 250, a proportion of an ethylene structure of 3% by mass or more, a content of a vinyl aromatic monomer unit of 9% by mass or more and 50% by mass or less, a proportion of a vinyl aromatic monomer block of 3% by mass or more and less than 30% by mass, a weight average molecular weight in a range of 80,000 to 1,000,000, and contains the block I or the block II as at least one block at a molecular end. In the present embodiment, the term "molded bale of a rubber-like block copolymer" refers to a concept of a molded article obtained, for example, by polymerizing the rubber-like block copolymer, and molding the resultant with a component such as a process oil added thereto into a bale shape generally employed in rubber industry, and basically containing the rubber-like block copolymer and containing inevitable components such as water and a residual solvent, and a component, such as an oil or a resin, not affecting performances of the rubber-like block copolymer.

(Iodine Value)

The iodine value of the rubber-like block copolymer used in the present embodiment is 3 to 250. The iodine value of the rubber-like block copolymer used in the present embodiment is 3 or more, preferably 10 or more, more preferably 15 or more, further preferably 30 or more, and further more preferably 50 or more from the viewpoints of, for

example, co-crosslinkability in use as a crosslinking rubber composition, and flexibility obtained in use in a tire. On the other hand, the iodine value of the rubber-like block copolymer used in the present embodiment is 250 or less, preferably 200 or less, more preferably 150 or less, further preferably 100 or less, and particularly preferably 70 or less from the viewpoints of, for example, mechanical strength and abrasion resistance obtained in use in a tire.

In the present embodiment, the iodine value can be measured in accordance with a method described in "JIS K 0070: 1992". The iodine value is a value, in terms of the weight in grams of iodine, corresponding to an amount of halogen reacting with 100 g of a target substance, and hence the unit of the iodine value is "g/100 g".

The rubber-like block copolymer having an iodine value of 3 to 250 has a double bond, and can be obtained by appropriately adjusting a content of a conjugated diene monomer and a hydrogenation rate in a method for producing a rubber-like block copolymer described below. Specifically, for example, if a conjugated diene monomer and a vinyl aromatic monomer are copolymerized, the iodine value of the rubber-like block copolymer is lower when a content of a conjugated diene monomer unit is lower. Alternatively, if a conjugated diene monomer unit is hydrogenated, the iodine value is lower as a hydrogenation rate is higher.

(Ethylene Structure)

The rubber-like block copolymer used in the present embodiment has a proportion of an ethylene structure of 3% by mass or more. Herein, the term "ethylene structure" refers to a polyethylene-like shape formed by polymerization using ethylene as a raw material, but does not require actual polymerization using ethylene as a raw material. For example, in polymerization using butadiene as a conjugated diene, a portion corresponding to a 1,4-bond of the butadiene forms an "ethylene structure" when hydrogenated. In the rubber-like block copolymer used in the present embodiment, when the proportion of the ethylene structure is 3% by mass or more, tensile strength obtained when a rubber composition containing the rubber-like block copolymer is formed into a vulcanizate is difficult to lower. From a similar viewpoint, in the rubber-like block copolymer used in the present embodiment, the proportion of the ethylene structure is preferably 5% by mass or more, more preferably 20% by mass or more, and further preferably 35% by mass or more. Besides, in the rubber-like block copolymer used in the present embodiment, the proportion of the ethylene structure is preferably 90% by mass or less, more preferably 80% by mass or less, and further preferably 70% by mass or less. In the rubber-like block copolymer used in the present embodiment, when the proportion of the ethylene structure is equal to or lower than these upper limits, favorable rubber elasticity is obtained.

(Rubber Composition)

In the present embodiment, the term "rubber composition" refers to a composition that contains the rubber-like block copolymer, and may contain another rubber component or a resin, and a filler such as silica or carbon, and is a composition exhibiting rubber elasticity as the whole composition.

(Vinyl Aromatic Monomer Block)

In the rubber-like block copolymer used in the present embodiment, a proportion of a vinyl aromatic monomer block is 3% by mass or more and less than 30% by mass. In the rubber-like block copolymer used in the present embodiment, when the proportion of the vinyl aromatic monomer block is 3% by mass or more, cold flow resistance obtained in the form of a molded bale of the rubber-like block copolymer is excellent, and rigidity obtained when a rubber composition containing the rubber-like block copolymer is formed into a vulcanizate is excellent. A polymer portion excluding the vinyl aromatic monomer block is not especially limited as long as the content of the ethylene structure and the content of the vinyl aromatic are satisfied, but for exhibiting "rubber-like" property, the content of the ethylene structure is preferably 3% by mass or more and 70% by mass or less, and the content of the vinyl aromatic unit is preferably 9% by mass or more and 50% by mass or less.

In the rubber-like block copolymer used in the present embodiment, the proportion of the vinyl aromatic monomer block preferably exceeds 5% by mass, is more preferably 10% by mass or more, further preferably 13% by mass or more, and further more preferably 15% by mass or more from the viewpoint of low permanent compression set obtained in the form of a rubber composition.

On the other hand, in the rubber-like block copolymer used in the present embodiment, when the proportion of the vinyl aromatic monomer block is less than 30% by mass, flexibility and processability obtained in the form of a rubber composition tend to be favorable. From a similar viewpoint, in the rubber-block copolymer of the present embodiment, the proportion of the vinyl aromatic monomer block is more preferably 25% by mass or less, further preferably 20% by mass or less, and particularly preferably 17% by mass or less.

(Weight Average Molecular Weight of Vinyl Aromatic Monomer Block)

A weight average molecular weight of the vinyl aromatic monomer block contained in the rubber-like block copolymer used in the present embodiment is preferably 1,000 or more, more preferably 2,000 or more, further preferably 3,000 or more, further more preferably 5,000 or more, and still further preferably 10,000 or more from the viewpoint of high mechanical strength of a rubber composition. On the other hand, the weight average molecular weight of the vinyl aromatic monomer block contained in the rubber-like block copolymer used in the present embodiment is preferably 40,000 or less, more preferably 30,000 or less, and further preferably 20,000 or less from the viewpoint of moldability of the rubber-like block copolymer.

It is noted, in the present embodiment, that a vinyl aromatic monomer block refers to a block including a chain of eight or more vinyl aromatic monomer units.

A content of the vinyl aromatic monomer block can be calculated, when the copolymer is a butadiene-styrene copolymer, by decomposing the polymer by a method of Kolthoff (method described in I. M. Kolthoff et al., J. Polym. Sci. 1, 429 (1946)), and analyzing an amount of polystyrene insoluble in methanol. As another method, any of known methods such as one in which a chain of styrene units is measured by NMR as described in International Publication No. WO2014/133097 can be employed for the measurement. It is noted, in the present embodiment, that the content of the vinyl aromatic monomer block can be measured by a method described in Examples below.

(Number of Vinyl Aromatic Monomer Blocks)

The rubber-like block copolymer used in the present embodiment contains at least one vinyl aromatic monomer block. When the vinyl aromatic monomer block is contained, cold flow resistance is favorable and rigidity obtained when a rubber composition containing the rubber-like block copolymer is formed into a vulcanizate is excellent as compared with a rubber-like block copolymer not containing a vinyl aromatic monomer block even if the content of the vinyl aromatic monomer unit is the same.

When two or more vinyl aromatic monomer blocks are contained, however, the copolymer is liable to have thermoplasticity, and hence tends to be sticky in molding the rubber-like block copolymer of the present embodiment into a bale shape. Therefore, when it is significant to obtain favorable moldability of a bale, or from the viewpoint of preventing kneading failure due to rubber elasticity in kneading with another material (such as a bale-shaped material), the number of vinyl aromatic monomer blocks in the rubber-like block copolymer is preferably one.

The weight average molecular weight of the vinyl aromatic monomer block can be obtained by a method in which the above-described polystyrene insoluble in methanol is measured by employing GPC as described in Examples below.

[Block Structure of Rubber-like Block Copolymer]

A block structure of the rubber-like block copolymer used in the present embodiment has preferably one of structures represented by the following general formulas from the viewpoint of moldability of a bale:

(a-b)n;
(b-a-b)n;
a-(a-b)n;
b-(a-b)n;
b-(a-b)n-X;
[(b-a)k]m-X; and
[(b-a)k-b]m-X.

From the viewpoint of productivity of the rubber-like block copolymer, the block structure of the rubber-like block copolymer used in the present embodiment is more preferably a structure represented by a general formula (a-b)n, (b-a-b)n, [(b-a)k]m-X, or [(b-a)k-b]m-X, and is more preferably a structure represented by (a-b)n, or [(b-a)k]m-X.

In the above-described general formulas, a represents an aromatic vinyl monomer block, b represents a block containing an ethylene structure, a conjugated diene structure, and an $\alpha$-olefin structure, or a block having a content of the vinyl aromatic monomer unit of 80% by mass or less and containing the vinyl aromatic monomer unit, an ethylene structure, a conjugated diene structure, and an $\alpha$-olefin structure.

Herein, the term "conjugated diene structure" refers to a structure including a double bond remaining in a generated polymer as in the case of polymerization performed with conjugated diene used as a monomer. For example, a portion formed as a 1,4-bond in polymerizing butadiene is a polymer chain having a double bond, and corresponds to the "conjugated diene structure". On the other hand, as described above, even if conjugated diene is used as a raw

material, a portion resulting from a hydrogenation reaction loses a double bond, and hence is an ethylene structure and does not correspond to a conjugated diene structure.

Herein, the term "$\alpha$-olefin structure" refers to a structure in which an olefin portion forms a polymer chain, and a portion excluding olefin in the monomer is branched from the polymer chain as in the case of polymerization performed with $\alpha$-olefin used as a monomer. For example, a vinyl bond is formed in a portion formed as a 1,2-bond in polymerizing butadiene, and a hydrogenation reaction performed in this portion results in an $\alpha$-olefin structure.

n and k are integers of 1 or more, and are preferably integers of 1 to 5.

m is an integer of 2 or more, and is preferably an integer of 2 to 11.

X represents a residue of a coupling agent, or a residue of a polyfunctional initiator.

In the general formula, [(b-a)k]m-X, the polymer block a is bound only via the residue of a coupling agent or the residue X of a polyfunctional initiator, and therefore, the number of vinyl aromatic monomer blocks is regarded as 1.

In the rubber-like block copolymer used in the present embodiment, when each of the aromatic vinyl monomer block (corresponding to the block represented by a in each of the above-described general formulas, hereinafter referred to also as the "polymer block (a)") and a block excluding it (corresponding to the block represented by b in each of the above-described general formulas, hereinafter referred to also as the "polymer block (b)") is present in a plural number, the plural blocks may be the same or different in the structure such as the molecular weight or the composition.

A boundary between the blocks need not be always clearly distinguished.

In the rubber-like block copolymer used in the present embodiment, at least one block at a molecular end is the polymer block (b), namely, either of the following blocks I and II:

Block I: A block containing an ethylene structure, a conjugated diene structure, and an $\alpha$-olefin structure; and
Block II: a block having a content of the vinyl aromatic monomer unit of 80% by mass or less and containing the vinyl aromatic monomer unit, an ethylene structure, a conjugated diene structure, and an $\alpha$-olefin structure.

(Structure of Block II)

The microstructures of the block II (the vinyl aromatic monomer unit, the ethylene structure, the conjugated diene structure, and the $\alpha$-olefin structure) are not especially limited, and may be uniformly distributed (at random), or may be distributed in a tapered shape, a stepwise shape, a convex shape, or a concave shape, and from the viewpoint of polymerization efficiency, are preferably distributed at random or in a tapered manner. Herein, the term "tapered shape" or "tapered structure" refers to a state where an existing proportion of the vinyl aromatic monomer unit is gradually increased or reduced in the block. The distributions of the ethylene structure, the conjugated diene structure and the $\alpha$-olefin structure do not relate to recognition of the "tapered structure". A polymerization rate of vinyl aromatic is typically lower than that of conjugated diene, and therefore, when copolymerization is caused with no or little polymerization rate adjustor added, the conjugated diene is priorly consumed at a high ratio, and the vinyl aromatic remains at a high ratio, and as a result, the existing proportion of the vinyl aromatic is gradually increased in a block formed in a latter half of the polymerization to easily form a tapered shape.

When the microstructures of the block II are distributed in a random shape, an exothermic index, tan $\delta$ = G''/G' = loss elastic modulus/storage modulus, obtained in the form of a rubber composition is sharp, and it is presumed that fuel economy obtained in use in a tire member is excellent because the value of tan $\delta$ at a high temperature is small, namely, it is low exothermic.

For obtaining random shape microstructures of the block II, a method is not especially limited, and for example, a method in which a polar substance is added in the polymerization, a method in which the monomers are continuously supplied to a polymerizer, or the like can be employed.

On the other hand, when the microstructures of the block II are in a tapered shape, the exothermic index, tan $\delta$ = G"/G' = loss elastic modulus/storage modulus, obtained in the form of a rubber composition is broad, and it is presumed that wet grip performance and winter performance are excellent in use in a tire member.

When at least one block at a molecular end is the polymer block (b) in the rubber-like block copolymer used in the present embodiment, if the molecular weight is low, the rubber-like block copolymer is difficult to flow, and hence stickiness or adhesion can be inhibited in molding a bale, and on the other hand, even if the molecular weight is high, the rubber-like block copolymer is melt at a temperature for molding a bale, and hence the bale tends to be easily molded.

If necessary, the rubber-like block copolymer may contain, in addition to the polymer blocks (a) and (b), a polymer block in a content of 40% by mass or less. From the viewpoint of balance among break strength, wet skid resistance and abrasion resistance obtained in use in a tire or a shoe sole, however, the content of the polymer block contained in addition to the polymer blocks (a) and (b) is preferably 30% by mass or less, more preferably 20% by mass or less, further preferably 10% by mass or less, and particularly preferably 5% by mass or less.

When a coupling agent is added after polymerizing the monomers, the coupling agent is preferably reacted with an end of the polymer block (b) for increasing the reaction rate of the coupling agent.

The coupling agent used in a coupling reaction process may have any structure as long as it is a bi- or higher functional reactive compound, and is preferably a bi- or higher functional reactive compound having a silicon atom.

When a reactive compound having a silicon atom is used as the coupling agent, a conjugated diene-based polymer used in the present embodiment has a silicon atom.

The microstructures (such as distributions of a vinyl aromatic compound, a cis, trans, and vinyl structure in conjugated diene, the ethylene structure, and the α-olefin structure, etc.) in each of the polymer blocks (a) and (b) are not especially limited, but may be uniformly distributed, or distributed in a tapered manner, a stepwise manner, a convex manner, or a concave manner. Besides, a plurality of distribution forms may be simultaneously present in each of the blocks.

When the rubber-like block copolymer used in the present embodiment is obtained by polymerizing at least a conjugated diene monomer or copolymerizing a conjugated diene monomer and another monomer if necessary, and then hydrogenating some or most of double bonds contained in the resultant polymer, a distribution of a hydrogenation rate among molecules or polymer blocks is not especially limited, and the hydrogenation rate may be uniform, nonuniform, or distributed.

The polymer block (b) contained in the rubber-like block copolymer used in the present embodiment is a block containing an ethylene structure, a conjugated diene structure and an α-olefin structure, or a block having a content of a vinyl aromatic monomer unit of 80% by mass or less and containing the vinyl aromatic monomer unit, an ethylene structure, a conjugated diene structure, and an α-olefin structure, and is preferably a block containing an ethylene structure, a conjugated diene structure and an α-olefin structure from the viewpoint of mechanical strength obtained in the form of a rubber composition.

When the polymer block (b) is a block having a content of a vinyl aromatic monomer unit of 80% by mass or less and containing the vinyl aromatic monomer unit, an ethylene structure, a conjugated diene structure, and an α-olefin structure, the content of the vinyl aromatic monomer unit in the polymer block (b) is preferably 5% by mass or more, more preferably 8% by mass or more, and further preferably 12% by mass or more from the viewpoints of wet skid resistance and tear strength obtained in the form of a rubber composition. On the other hand, the content of the vinyl aromatic monomer unit in the polymer block (b) is preferably 50% by mass or less, more preferably 45% by mass or less, and further preferably 40% by mass or less from the viewpoints of flexibility and tensile elongation.

The content of the ethylene structure in the polymer block (b) is preferably 3% by mass or more, more preferably 10% by mass or more, and further preferably 20% by mass or more from the viewpoint of abrasion resistance of a rubber composition. On the other hand, the content of the ethylene structure in the polymer block (b) is preferably 70% by mass or less, more preferably 60% by mass or less, further preferably 50% by mass or less, and particularly preferably 40% by mass or less from the viewpoints of flexibility and permanent compression set resistance obtained in the form of a rubber composition.

The content of the α-olefin structure in the polymer block (b) is preferably 10% by mass or more, more preferably 12% by mass or more, and further preferably 15% by mass or more from the viewpoint of wet skid resistance obtained in the form of a rubber composition. On the other hand, the content of the α-olefin structure in the polymer block (b) is preferably 60% by mass or less, more preferably 50% by mass or less, and further preferably 40% by mass or less from the viewpoint of tensile strength.

The content of another monomer, such as 1,2-butadiene, in the polymer block (b) is preferably 10% by mass or less, more preferably 5% by mass or less, and further preferably 3% by mass or less from the viewpoint of balance among heat aging resistance, mechanical strength, and flexibility.

The content of the polymer block (b) in the rubber-like block copolymer used in the present embodiment is preferably 50% by mass or more, more preferably 60% by mass or more, further preferably 70% by mass or more, and particularly preferably 80% by mass or more from the viewpoints of tensile energy and abrasion resistance obtained when a rubber composition containing the rubber-like block copolymer is formed into a vulcanizate. On the other hand, the content of the polymer block (b) in the rubber-like block copolymer used in the present embodiment is preferably 96% by mass or less, more preferably 90% by mass or less, and further preferably 85% by mass or less from the viewpoint of rigidity obtained in the form of a rubber composition.

The polymer block (b) contained in the rubber-like block copolymer used in the present embodiment may have a main chain branch structure. The main chain branch structure has, as branch points, in a portion derived from a vinyl-based monomer containing an alkoxysilyl group or a halosilyl group, 2 or more branch points, preferably 3 or more branch points, and further preferably 4 or more branch points.

The branch point constituting the main branch structure has preferably at least 2 or more polymer chains, and more preferably 3 or more polymer chains not corresponding to a main chain.

Particularly in a main chain branch structure containing a vinyl-based monomer containing an alkoxysilyl group or a halosilyl group, a peak derived from the main chain branch structure is detected, in signal detection by $^{29}$Si-NMR, in a range of -45 ppm to - 65 ppm, and more restrictively in a range of -50 ppm to - 60 ppm. The above-described portion derived from the vinyl-based monomer containing an alkoxysilyl group or a halosilyl group is a monomer unit based on

a compound represented by the following formula (1) or (2), and preferably includes a branch point of a polymer chain formed by the monomer unit based on the compound represented by the formula (1) or (2).

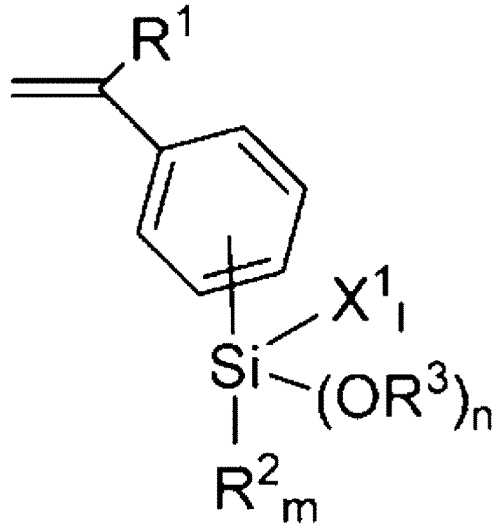

(1)

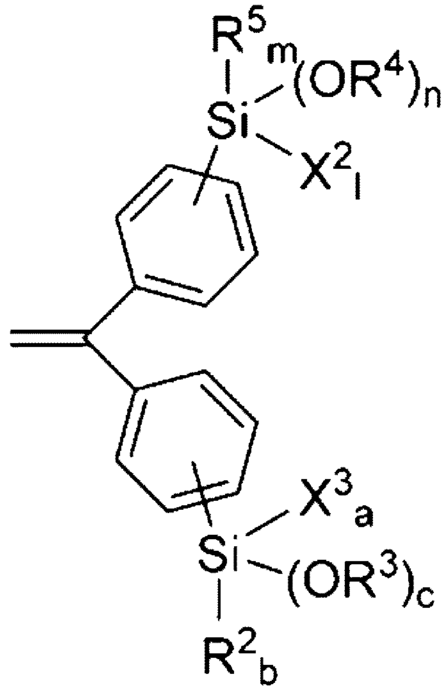

(2)

In the formula (1), $R^1$ represents a hydrogen atom, an alkyl group having 1 to 20 carbon atoms, or an aryl group having 6 to 20 carbon atoms, and may have a branch structure in a part thereof.

$R^2$ and $R^3$ each independently represent an alkyl group having 1 to 20 carbon atoms, or an aryl group having 6 to 20 carbon atoms, and may have a branch structure in a part thereof. Each of $R^1$ to $R^3$, if present in a plural number, is respectively independent.

$X^1$ represents a halogen atom. If present in a plural number, each $X^1$ is respectively independent.

m represents an integer of 0 to 2, n represents an integer of 0 to 3, l represents an integer of 0 to 3, and (m + n + l) is 3.

In the formula (2), $R^2$ to $R^5$ each independently represent an alkyl group having 1 to 20 carbon atoms, or an aryl group having 6 to 20 carbon atoms, and may have a branch structure in a part thereof.

Each of $R^2$ to $R^5$, if present in a plural number, is respectively independent. $X^2$ and $X^3$ each independently represent a halogen atom. Each of $X^2$ and $X^3$, if present in a plural number, is respectively independent. m represents

an integer of 0 to 2, n represents an integer of 0 to 3, and l represents an integer of 0 to 3.

(m + n+ l) is 3.
a represents an integer of 0 to 2, b represents an integer of 0 to 3, and c represents an integer of 0 to 3. (a + b + c) is 3.

(Content of Vinyl Aromatic Monomer Unit)

A content of the vinyl aromatic monomer unit in the rubber-like block copolymer used in the present embodiment is 9% by mass or more, more preferably 10% by mass or more, further preferably 15% by mass or more, and particularly preferably 20% by mass or more from the viewpoints of resistance to deformation in transport of a molded bale, and break strength and wet skid resistance obtained in the form of a rubber composition. On the other hand, the content of the vinyl aromatic monomer unit in the rubber-like block copolymer used in the present embodiment is preferably 50% by mass or less, more preferably 40% by mass or less, and further preferably 35% by mass or less from the viewpoints of cuttability in weighing for obtaining a molded bale, and fuel economy and abrasion resistance obtained in using the rubber composition in a tire tread.
The content of the vinyl aromatic monomer unit in the rubber-like block copolymer used in the present embodiment is preferably 30% by mass or more when high modulus is required as in a foam shoe sole, a run flat tire member, or the like.

(Ratio between Proportion of Vinyl Aromatic Monomer Block and Content of Vinyl Aromatic Monomer Unit)

A ratio obtained by dividing the proportion of the vinyl aromatic monomer block by the content of the vinyl aromatic monomer unit in the rubber-like block copolymer (proportion of vinyl aromatic monomer block/content of vinyl aromatic monomer unit) is preferably 0.28 to 1.00 from the viewpoint of cold flow resistance. From the viewpoint of rigidity obtained in the form of a rubber composition, the ratio is more preferably 0.30 or more, further preferably 0.50 or more, and particularly preferably 0.60 or more. On the other hand, the ratio is more preferably 0.90 or less, further preferably 0.80 or less, and particularly preferably 0.70 or less from the viewpoints of hardness of a bale and kneadability in kneading the molded bale of the present embodiment.
In the present embodiment, the content of the vinyl aromatic monomer unit in the rubber-like block copolymer can be measured by a method described in Examples below.

(Content of $\alpha$-Olefin Structure)

The content of the $\alpha$-olefin structure in the rubber-like block copolymer used in the present embodiment is preferably 10% by mass or more, more preferably 12% by mass or more, and further preferably 15% by mass or more from the viewpoints of productivity of the rubber-like block copolymer, and tensile strength obtained in the form of a rubber composition. On the other hand, the content of the $\alpha$-olefin structure in the rubber-like block copolymer used in the present embodiment is preferably 65% by mass or less, more preferably 60% by mass or less, further preferably 52% by mass or less, and particularly preferably 40% by mass or less from the viewpoints of heat aging resistance and ozone resistance in the rubber-like block copolymer.
Thus, a rubber composition for a tire excellent in tensile strength and ozone resistance, and a rubber composition particularly suitable for a tire sidewall tend to be obtained.
The content of the $\alpha$-olefin structure (such as a butylene content) in the rubber-like block copolymer can be controlled in accordance with a vinyl bond content before hydrogenation or a hydrogenation rate.
In the present embodiment, the content of the $\alpha$-olefin structure (such as a butylene content) in the rubber-like block copolymer can be measured by a method described in Examples below.

(Vinyl Bond Content in Conjugated Diene Monomer Unit)

In the same manner as described above, when the rubber-like block copolymer is produced by polymerizing or copolymerizing a conjugated diene monomer and then hydrogenating the resultant, a vinyl bond content in the conjugated diene monomer unit in the rubber-like block copolymer before hydrogenation is preferably 10% by mol, more preferably 14% by mol, further preferably 20% by mol, and particularly preferably 25% by mol. On the other hand, the vinyl bond content in the conjugated diene monomer unit in the rubber-block copolymer before hydrogenation is preferably 65% by mol or less, more preferably 60% by mol or less, further preferably 52% by mol or less, and particularly preferably 40% by mol or less.
A method for controlling the vinyl bond content in the conjugated diene monomer unit in the rubber-like block copolymer to fall in the preferable range is not especially limited, and examples include a method in which an amount

of a polar substance to be added is adjusted, and a method in which a polymerization temperature is adjusted.

(Molecular Weight of Rubber-like Block Copolymer)

The weight average molecular weight of the rubber-like block copolymer used in the present embodiment is 80,000 or more, preferably 100,000 or more, more preferably 120,000 or more, and further preferably 150,000 or more from the viewpoints of moldability of a bale, compatibility in obtaining a rubber composition, and tensile elongation in forming the rubber composition into a vulcanizate. On the other hand, from the viewpoint of processability in forming a rubber composition, the weight average molecular weight of the rubber-like block copolymer used in the present embodiment is 1,000,000 or less, preferably 700,000 or less, more preferably 600,000 or less, and further preferably 500,000 or less.

A method for controlling the weight average molecular weight of the rubber-like block copolymer to fall in the above-described range is not especially limited, and an example includes a method in which an amount of a polymerization initiator to be added, or an amount of a coupling agent or a modifier to be added is adjusted.

A molecular weight distribution (= weight average molecular weight/number average molecular weight) of the rubber-like block copolymer used in the present embodiment is preferably 2.0 or less, more preferably 1.8 or less, and further preferably 1.6 or less from the viewpoints of compatibility in obtaining a rubber composition and fuel economy obtained in using the rubber composition in a tire. On the other hand, from the viewpoint of processability in obtaining the rubber composition, the molecular weight distribution (= weight average molecular weight/number average molecular weight) of the rubber-like block copolymer used in the present embodiment is preferably 1.05 or more, more preferably 1.1 or more, and further preferably 1.2 or more.

A method for controlling the molecular weight distribution of the rubber-like block copolymer to fall in the above-described range is not especially limited, and examples include a method in which an amount of a polar substance to be added is adjusted, and a method in which a polymerization temperature is adjusted.

The weight average molecular weight and the molecular weight distribution of the rubber-like block copolymer used in the present embodiment can be calculated based on a molecular weight, in terms of polystyrene, measured by gel permeation chromatography (hereinafter also referred to as "GPC") described in Examples below.

(Number of Peaks of Rubber-like Block Copolymer)

In a preferable aspect, the rubber-like block copolymer used in the present embodiment is a rubber-like block copolymer having one peak in a GPC curve measured by gel permeation chromatography (hereinafter also referred to as "GPC"). When a rubber-like block copolymer having one peak in a GPC curve is used, there is a tendency that a rubber composition containing a filler uniformly dispersed therein can be obtained in kneading the molded bale of the present embodiment with the filler. The mechanism of this tendency is not clear, but the tendency of homogeneous dispersion of the filler can be caused probably because the molecular weight is uniform. It is noted that the number of peaks is a factor set in consideration of influence on easy mixture, and since a peak lower than 5% by mass in a GPC curve less affects the easy mixture, such a peak is not counted as the number of peaks.

For obtaining such a rubber-like block copolymer, for example, a deactivator described below is preferably added after a polymerization process or a hydrogenation process of the rubber-like block copolymer used in the present embodiment. Thus, a coupling reaction otherwise caused by an impurity during the polymerization process is inhibited, and hence a rubber-like block copolymer having one peak in a GPC curve can be obtained. Alternatively, reduction of an amount of polymers deactivated during polymerization by increasing purities of a monomer and a solvent to be introduced into a reactor is also effective.

In another preferable aspect, the rubber-like block copolymer used in the present embodiment has two or more peaks in a GPC curve measured by GPC, and a peak area of a peak having the lowest molecular weight is 5% or more and less than 95% of the total peak area. As a result, as compared with a rubber-like block copolymer having one peak in a GPC curve and having the same molecular weight, processability in obtaining a rubber composition tends to be excellent, and a viscosity of a rubber composition obtained by adding a filler thereto tends to be low. For obtaining such a rubber-like block copolymer, for example, a coupling agent or a modifier is added after the polymerization process of the rubber-like block copolymer used in the present embodiment. The peak area of the peak having the lowest molecular weight is preferably 30% or more, and more preferably 50% or more of the total peak area from the viewpoint of a solution viscosity obtained in producing the rubber-like block copolymer. On the other hand, the peak area of the peak having the lowest molecular weight is preferably less than 80%, and more preferably less than 70% of the total peak area from the viewpoints of moldability of a bale and tensile elongation in forming the rubber composition into a vulcanizate.

(Mooney Viscosity)

Mooney viscosities of the rubber-like block copolymer and a rubber composition containing the rubber-like block copolymer can be indexes including information on the molecular weight, the molecular weight distribution, a branch number, a content of a softener, and the like of the rubber-like block copolymer.

The Mooney viscosity measured at 100°C of the rubber-like block copolymer used in the present embodiment is preferably 40 or more, more preferably 50 or more, and further preferably 55 or more from the viewpoints of abrasion resistance and break strength obtained in forming the rubber composition into a vulcanizate. On the other hand, the Mooney viscosity measured at 100°C of the rubber-like block copolymer used in the present embodiment is preferably 180 or less, more preferably 150 or less, further preferably 130 or less, and particularly preferably 110 or less from the viewpoints of productivity of the rubber-like block copolymer and the rubber composition, and processability in obtaining a composition with a filler or the like compounded.

In the present embodiment, a Mooney viscosity is obtained by a method prescribed in ISO 289 described in Examples below.

[Modifier and Modification Ratio]

The rubber-like block copolymer used in the present embodiment preferably contains a nitrogen atom from the viewpoint of increasing dispersibility of an inorganic filler such as silica in forming a rubber composition therefrom.

The rubber-like block copolymer of the present embodiment has a modification ratio, measured by column adsorption GPC of the rubber-like block copolymer, of preferably 40% by mass or more, more preferably 60% by mass or more, and further preferably 70% by mass or more from the viewpoint of dispersibility of silica in the rubber composition. On the other hand, an upper limit of the modification ratio measured by column adsorption GPC is not especially limited in the rubber-like block copolymer of the present embodiment, and is, for example, 98% by mass.

In the present embodiment, the term "modification ratio" refers to a mass ratio of a polymer having a nitrogen atom-containing functional group to the total amount of the rubber-like block copolymer.

A position where a nitrogen atom is introduced in the rubber-like block copolymer used in the present embodiment may be any one of a polymerization starting end, a molecular chain (including a graft product), and a polymerization end of the rubber-like block copolymer.

When the rubber-like block copolymer used in the present embodiment is produced by polymerizing a conjugated diene monomer and then hydrogenating the resultant, as a method for introducing a nitrogen atom into the rubber-like block copolymer, a method in which a coupling agent containing a tin atom or a nitrogen atom is used for the introduction is preferably employed, and a method in which a coupling agent containing a nitrogen atom is used for the introduction is more preferably employed from the viewpoints of productivity of the rubber-like block copolymer, easiness in obtaining a rubber-like block copolymer having a high modification ratio, and improvement of abrasion resistance and fuel economy obtained in forming the rubber composition containing the rubber-like block copolymer into a vulcanizate.

As a coupling agent containing a nitrogen atom, from the viewpoints of polymerization productivity and a high modification ratio, an isocyanate compound, an isothiocyanate compound, an isocyanuric acid derivative, a nitrogen group-containing carbonyl compound, a nitrogen group-containing vinyl compound, a nitrogen group-containing epoxy compound, a nitrogen group-containing alkoxysilane compound, an amide compound, and the like are preferred.

Among these coupling agents containing a nitrogen atom, from the viewpoints of productivity of the rubber-like block copolymer, easiness in obtaining a rubber-like block copolymer having a high modification ratio, and tensile strength and low fuel consumption performance obtained in a tire produced from the rubber composition containing the rubber-like block copolymer, an amide compound and a nitrogen group-containing alkoxysilane compound are more preferred.

Preferable examples of the amide compound include 1,3-diethyl-2-imidazolinone, 1,3-dimethyl-2-imidazolinone, 1,3-dipropyl-2-imidazolinone, 1-methyl-3-ethyl-2-imidazolinone, 1-methyl-3-propyl-2-imidazolinone, 1-methyl-3-butyl-2-imidazolinone, 1,3-dihydro-1,3-dimethyl-2H-imidazol-2-on, 1,3-diethyl-2-imidazolidinone, 1,3-dimethyl-2-imidazolidinone, 1,3-dipropyl-2-imidazolidinone, 1-methyl-3-ethyl-2-imidazolidinone, 1-methyl-3-propyl-2-imidazolidinone, and 1-methyl-3-butyl-2-imidazolidinone.

Preferable examples of the nitrogen atom-containing alkoxysilane compound include 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy-2-methyl-1-(3-trimethoxysilylpropyl)-1-aza-2-silacyclopentane, 2-ethoxy-2-ethyl-1-(3-triethoxysilylpropyl)-1-aza-2-silacyclopentane, 2-methoxy-2-methyl-1-(3-dimethoxymethylsilylpropyl)-1-aza-2-silacyclopentane, 2-ethoxy-2-ethyl-1-(3-diethoxyethylsilylpropyl)-1-aza-2-silacyclopentane, tris(3-trimethoxysilylpropyl)amine, tris(3-methyldimethoxysilylpropyl)amine, tris(3-triethoxysilylpropyl)amine, tris(3-methyldiethoxysilylpropyl)amine, tris(trimethoxysilylmethyl)amine, tris(2-trimethoxysilylethyl)amine, tris(4-trimethoxysilylbutyl)amine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, $N^1$-(3-(bis(3-(trimethoxysilyl)propyl)amino)propyl)-$N^1$-methyl-$N^3$-(3-(methyl(3-(trimethoxysilyl)propyl)amino)propyl)-$N^3$-(3-(trimethoxysilyl)propyl)-1,3-propanediamine, 3-(4-methylpiperazin-1-yl)propyltrimethoxysilane, and 3-(4-methylpiperazin-1-yl)propyltriethoxysilane.

[Methods for Polymerizing and Hydrogenating Rubber-like Block Copolymer]

A method for producing the rubber-like block copolymer used in the present embodiment is not especially limited as long as a rubber-like block copolymer satisfying the above-described requirements can be obtained.

A specific method for producing the rubber-like block copolymer used in the present embodiment is not especially limited, and examples include a method including a step of polymerizing at least a conjugated diene monomer or copolymerizing a conjugated diene monomer and a monomer used if necessary, and hydrogenating the resultant, and a method including a step of polymerizing a conjugated diene monomer (without hydrogenation) or copolymerizing a conjugated diene monomer and a monomer used if necessary (without hydrogenation).

The conjugated diene monomer is not especially limited, and examples include 1,3-butadiene, isoprene, 2,3-dimethyl-1,3-butadiene, 1,3-pentadiene, 3-methyl-1,3-pentadiene, 1,3-hexadiene, and 1,3-heptadiene. Among these, 1,3-butadiene and isoprene are preferred, and 1,3-butadiene is particularly preferred from the viewpoint of industrial availability. One of these may be singly used, or two or more of these may be used together.

The monomer used if necessary is not especially limited, and from the viewpoint of mechanical strength obtained in the form of a tire, a vinyl aromatic monomer is preferably used to be copolymerized with the conjugated diene monomer. The vinyl aromatic monomer is not especially limited, and examples include styrene, p-methylstyrene, $\alpha$-methylstyrene, vinyl ethyl benzene, vinyl xylene, vinyl naphthalene, diphenylethylene, vinyl benzyl dimethylamine, (4-vinylbenzyl)dimethyl aminoethyl ether, N,N-dimethylaminoethyl styrene, N,N-dimethylaminomethyl styrene, and tertiary amino group-containing diphenylethylene (such as 1-(4-N,N-dimethylaminophenyl)-1-phenylethylene). Among these, styrene is preferred from the viewpoint of industrial availability. One of these may be singly used, or two or more of these may be used together.

Another monomer used if necessary can be used.

The another monomer is not especially limited, and examples include an unsaturated carboxylic acid ester, an unsaturated carboxylic acid, an $\alpha,\beta$-unsaturated nitrile compound, an $\alpha$-olefin (such as butylene, propylene, butylene, pentene, or hexene), ethylene, myrcene, ethylidene norbornene, isopropylidene norbornene, cyclopentadiene, and divinylbenzene.

As the method for producing the rubber-like block copolymer, examples of the method for polymerizing a conjugated diene monomer or copolymerizing a conjugated diene monomer with a monomer used if necessary (without hydrogenation) include production methods employing coordination polymerization as described in International Publication Nos. WO2019/078083, WO2019/111496, WO2019/142501, WO2019/171679, and WO2019/216100, although a block structure is not exemplified therein.

In this case, a vinyl aromatic monomer, ethylene, $\alpha$-olefin, a conjugated diene monomer, and another monomer added at the time of polymerization are preferably the same types as the monomers exemplified above regarding the case of the production by polymerizing a conjugated diene monomer or copolymerizing a conjugated diene monomer and a monomer used if necessary, and hydrogenating the resultant.

The rubber-like block copolymer used in the present embodiment is produced preferably by anionic polymerization from the viewpoint of easy control of the block structure, and is produced preferably by hydrogenating some or most of double bonds of a polymer after polymerizing at least a conjugated diene monomer or copolymerizing a conjugated diene monomer and a monomer used if necessary.

As a method for performing hydrogenation after polymerizing at least a conjugated diene monomer or copolymerizing a conjugated diene monomer and a monomer used if necessary, as described in International Publication No. WO96/005250, Japanese Patent Laid-Open No. 2000-053706, and International Publication Nos. WO2003/085010, WO2019/151126, WO2019/151127, WO2002/002663, and WO2015/006179, a method in which a conjugated diene monomer is polymerized by anionic polymerization, or copolymerized with another monomer if necessary, with various additives under various conditions, and then the resultant is hydrogenated is preferably employed.

The polymerization process and the hydrogenation process described above can be performed respectively by either a batch method or a continuous method.

The rubber-like block copolymer used in the present embodiment encompasses a hydrogenated product of the rubber-like block copolymer after hydrogenation.

[Process Following Polymerization Process or Hydrogenation Process of Rubber-like Block Copolymer]

After the polymerization process or the hydrogenation process of the rubber-like block copolymer used in the present embodiment, it is preferable to add a deactivator, a neutralizer or the like.

Examples of the deactivating agent include, but are not limited to, water; and alcohols such as methanol, ethanol, and isopropanol.

Examples of the neutralizer include, but are not limited to, carboxylic acids such as stearic acid, oleic acid, and versatic acid (a carboxylic acid mixture having 9 to 11 carbon atoms, mainly 10 carbon atoms, and having many branches); an aqueous solution of an inorganic acid, and carbon dioxide gas.

After the polymerization process of the rubber-like block copolymer of the present embodiment, it is preferable to add a rubber stabilizer from the viewpoints of prevention of gel formation and processing stability.

As the rubber stabilizer, any of known stabilizers, although not limited to the following, can be used, and antioxidants such as 2,6-di-tert-butyl-4-hydroxytoluene (hereinafter sometimes referred to as "BHT"), n-octadecyl-3-(4'-hydroxy-3',5'-di-tertbutylphenol)propionate, and 2-methyl-4,6-bis[(octylthio)methyl]phenol are preferred.

The rubber-like block copolymer used in the present embodiment contains a rubber softener if necessary. A content of the rubber softener is preferably 30% by mass or less.

For improving productivity of the rubber-like block copolymer and processability obtained in compounding an inorganic filler or the like in producing a tire, the rubber softener can be added in a content of 1 to 30% by mass to the rubber-like block copolymer of the present embodiment. On the other hand, for increasing the degree of compounding freedom in obtaining a rubber composition with a filler compounded, the rubber softener is used in a content of preferably 1 to 15% by mass in the rubber-like block copolymer of the present embodiment.

The content of the rubber softener in the molded bale of the rubber-like block copolymer of the present embodiment is more preferably 20% by mass or less, further preferably 10% by mass or less, and particularly preferably 5% by mass or less from the viewpoint of degradation over time caused in the form of a tire.

The rubber softener is not especially limited, and examples include an extender oil, a liquid rubber, and a resin.

From the viewpoints of processability, productivity, and economic efficiency, the rubber softener is preferably an extender oil.

As a method for adding the rubber softener to the rubber-like block copolymer, although not limited to the following, a method in which the rubber softener is added to be mixed with a polymer solution, and the thus obtained polymer solution containing the rubber softener is desolvated is preferably employed.

Preferable examples of the extender oil include an aromatic oil, a naphthenic oil, and a paraffin oil. Among these, from the viewpoint of environmental safety, and from the viewpoints of oil bleed prevention and wet grip characteristics, an aroma substitute oil containing 3% by mass or less of a polycyclic aromatic (PCA) component in accordance with the IP 346 method is preferred. Examples of the aroma substitute oil include, but are not limited to, TDAE (Treated Distillate Aromatic Extracts) and MES (Mild Extraction Solvate) described in Kautschuk Gummi Kunststoffe 52 (12) 799 (1999), and RAE (Residual Aromatic Extracts).

To the rubber-like block copolymer used in the present embodiment, various additives can be further added if necessary. As the additives, a filler described below, or a resin component as a tackifier can be added as a masterbatch in a process before molding. In this case, the amount of the additives is preferably 15% by mass or less.

[Method for Removing Solvent from Polymer Solution]

In the method for producing the rubber-like block copolymer used in the present embodiment, a method for removing a solvent from a polymer solution is not especially limited, and an example includes a method using flushing, steam stripping, a drying conveyer after dehydration, a devolatilizing extruder, a drum dryer, or a devolatilizing kneader.

From the viewpoint that thermal history is small, a method using at least steam stripping is preferred.

Examples of methods of steam stripping and a treatment performed before or after are not especially limited, and include methods described in Japanese Patent Laid-Open Nos. 10-168101 and 10-204136, International Publication No. WO2013-146530, Japanese Patent Laid-Open No. 2019-131810, and the like.

In the method for producing the rubber-like block copolymer used in the present embodiment, before performing an extruding/drying step, a desolvating step of removing a solvent from the polymer solution by steam stripping, and a screening step of taking out, from a slurry of the polymer, a water-containing crumb by separation from stripping water are preferably performed.

In a previous stage of the steam stripping, a flushing step may be performed for increasing the concentration of the solution.

When the desolvating step of removing a solvent from the polymer solution by steam stripping is performed at a previous stage of the extruding/drying step, a slurry in which porous granular crumbs not containing the solvent but containing water are dispersed in hot water is obtained.

When the screening step of taking out, from the slurry of the polymer, the water-containing crumb by separating from stripping water is performed, a porous granular crumb containing water can be obtained.

Besides, a squeezing dehydration step of performing dehydration with a roll, a screw compression squeezer or the like is preferably performed if necessary. Through such a dehydration step, a water-containing crumb in which a water content has been reduced can be obtained at the previous stage of the extruding/drying step.

A particle size of the water-containing crumb is preferably 0.1 mm or more from the viewpoint of scatter prevention in drying. The size is more preferably 0.5 mm or more. On the other hand, from the viewpoints of a drying property of a residual solvent and a moisture in the crumb, and expansion resistance of a molded article after molding a bale, the size is preferably 30 mm or less. The size is more preferably 20 mm or less.

A method for adjusting the particle size of the crumb is divided into one employed when the crumb is produced after desolvation, and one employed when the produced crumb is processed for adjustment. When the adjustment is performed in the process of producing crumb after desolvation, the method is not especially limited but examples include a method in which a molecular weight, a composition or a structure of the polymer is adjusted, a method in which the amount of a rubber softener to be added to the polymer solution is adjusted, a method in which a hole diameter of a die of an extruder-dryer is adjusted, and a method in which conditions to be employed in desolvation by putting the polymer solution into hot water are adjusted. In the method in which a molecular weight, a composition or a structure of the polymer is adjusted, the weight average molecular weight is preferably 80,000 or more for preventing crumbs from adhering to one another due to stickiness. When the vinyl aromatic monomer block is less than 30% by mass, crumbs are not dense, and hence there is a tendency that drying failure in the drying step can be inhibited. Furthermore, when the iodine value is 250 or less, the crumb has a good foaming property in the extruding/drying step, and the drying property of a residual solvent and a moisture tends to be favorable.

In the latter case where the produced crumb is processed for the adjustment, the method is not especially limited but examples include a method in which crumbs are sieved, and a method in which the crumbs are crushed and ground with a mixer or a granulator.

As conditions for contacting the solution of the rubber-like block copolymer after polymerization with hot water or steam, although not especially limited, a method in which a pressure for charging the solution is adjusted, a method in which a pressure, a temperature and an amount of steam are adjusted, a method in which a dispersant such as a phosphoric acid ester or a salt thereof like polyoxyalkylene alkyl ether phosphate, or a surfactant such as nonyl phenoxy polyethylene glycol phosphate or a salt thereof is added to steam, or a method in which the shape or the rotation speed of a rotor used in mixing is adjusted can be employed.

From the viewpoints of economic efficiency and removability of metal, it is preferable to contain an alcohol compound in the polymer solution as a deactivating agent, and it is more preferable to precedently add a dispersant or a surfactant to be added in steam stripping.

(Residual Solvent Amount)

A residual solvent amount in the molded bale of the rubber-like block copolymer of the present embodiment is preferably smaller from the viewpoints of an odor and VOC reduction. Specifically, the residual solvent amount in the molded bale of the present embodiment is preferably 5,000 ppm or less, more preferably 3,000 ppm or less, and further preferably 1,500 ppm or less. From the viewpoint of balance of economic efficiency, the residual solvent amount in the molded bale of the present embodiment is preferably 50 ppm or more, more preferably 150 ppm or more, and further preferably 300 ppm or more.

It is noted that the residual solvent amount in the present embodiment refers to a content of the solvent remaining in the molded bale.

In the present embodiment, the residual solvent amount can be measured by a method described in Examples below.

(Water Content)

A water content in the molded bale of the rubber-like block copolymer of the present embodiment is preferably 0.05% by mass or more and 1.5% by mass or less. The water content in the molded bale of the present embodiment is preferably 0.05% by mass or more, more preferably 0.1% by mass or more, and further preferably 0.2% by mass or more from the viewpoint of inhibiting gelation in drying performed after desolvation. On the other hand, the water content in the molded bale of the present embodiment is preferably 1.5% by mass or less, more preferably 1.0% by mass or less, and further preferably 0.8% by mass or less from the viewpoints of inhibition of condensation and discoloration resistance of the molded bale.

In the present embodiment, the water content can be measured by a method described in Examples below.

(Rubber Softener)

The molded bale of the rubber-like block copolymer of the present embodiment can contain a rubber softener from the viewpoints of productivity and processability. A content of the rubber softener in the molded bale of the present embodiment is preferably 30% by mass or less. In the molded bale of the present embodiment, the content of the rubber softener is more preferably 20% by mass or less, further preferably 10% by mass or less, and particularly preferably 5% by mass or less from the viewpoint of degradation over time caused when the molded bale is formed into a tire.

[Method for Producing Molded Bale]

A method for producing a molded bale of the present embodiment is not especially limited as long as a molded bale of a rubber-like block copolymer satisfying the above-described requirements 1 to 6 can be obtained, and can be a method, for example, including a step of polymerizing at least a vinyl aromatic monomer and a conjugated diene monomer with an organolithium compound used as a polymerization initiator to obtain a rubber-like block copolymer, a step of hydrogenating the rubber-like block copolymer to obtain a hydrogenated product of the rubber-like block copolymer, and a step of molding the hydrogenated product of the rubber-like block copolymer to obtain a molded bale.

The method for producing the molded bale of the present embodiment preferably includes, after copolymerizing a vinyl aromatic monomer and a conjugated diene monomer, or polymerizing a conjugated diene monomer, a step of adding a vinyl aromatic monomer.

The method for producing the molded bale of the present embodiment preferably includes a step of coupling the rubber-like block copolymer using a coupling agent.

The shape of the molded bale of the rubber-like block copolymer of the present embodiment is not especially limited, and is preferably a block shape from the viewpoint of handleability. Besides, the size of the molded bale of the present embodiment is, in terms of the volume of the molded bale, preferably 1,000 $cm^3$ or more, more preferably 5,000 $cm^3$ or more, and further preferably 10,000 $cm^3$ or more from the viewpoints of easy moldability and handleability. As the weight and the shape of the molded bale of the present embodiment, a rectangular parallelepiped bale of 17.5 kg to 35 kg is particularly preferred, the size of such a rectangular parallelepiped bale is not especially limited, and for example, a size of about 30 to 40 cm in width x about 60 to 80 cm in length x about 10 to 30 cm in height is suitable.

As a method for molding the rubber-like block copolymer into the molded bale, for example, a method in which crumbs having a specific surface area of 0.7 $m^2/g$ to 3.2 $m^2/g$ are produced, and the crumbs of the rubber-like block copolymer are compression molded is preferred. From the viewpoint of moldability, the method preferably further includes a step of sieving the crumbs of the rubber-like block copolymer before molding.

Since the crumbs are in close contact with one another in the compression molding of the crumbs of the rubber-like block copolymer in some cases, a specific surface area of the molded article is small as compared with the specific surface area of the crumbs. The close contact among the crumbs in the compression molding can be adjusted in accordance with the molecular weight, the composition and the structure of the rubber-like block copolymer, the composition of the rubber softener, and a temperature and a pressure employed in the compression. For example, if the specific surface area of the bale is to be reduced by increasing the close contact among the crumbs, it is preferable to employ, for example, a condition of reducing the molecular weight of the rubber-like block copolymer, increasing the amount of the rubber softener, or increasing the temperature and the pressure employed in the compression.

The specific surface area of the molded article is 0.005 to 0.05 $m^2/g$, and more preferably 0.01 to 0.04 $m^2/g$ from the viewpoint of a film packaging property. The specific surface area of the molded article is preferably 0.005 $m^2/g$ or more because expansion of the bale can be thus inhibited, and the specific surface area of the molded article is preferably 0.05 $m^2/g$ or less because the crumbs peeling off from the molded article can be thus reduced.

The specific surface area of the molded article can be obtained by a BET method.

In general, the specific surface area of a big molded article tends to be varied depending on the position, and hence, collection from a portion near the center of the molded article is preferable.

The crumbs of the rubber-like block copolymer are preferably sieved into respective particle sizes, before molding, to be mixed in an appropriate quantitative ratio.

If the specific surface area of the molded article molded by directly using the crumbs resulting from the desolvation is over the upper limit of the above-described range, among the sieved crumbs, a composition of crumbs having a large particle size may be increased to reduce a composition of crumbs having a small particle size. If the specific surface area is smaller than the lower limit, the composition of crumbs having a large particle size may be reduced to increase the composition of crumbs having a small particle size.

A compression pressure for molding the molded article is preferably 3 to 30 MPa, and more preferably 10 to 20 MPa. When the compression pressure in the molding is 30 MPa or less, an apparatus to be used can be designed to be compact, and hence installation efficiency is high. When the compression pressure in the molding is 3 MPa or more, favorable moldability is obtained. When moldability is favorable, there is a tendency that the surface of the molded

article is smooth, that the polymer is not peeled off in process following the molding, and that expansion otherwise caused after the molding is inhibited.

A temperature of the rubber-like block copolymer in the molding is preferably 30 to 120°C, and from the viewpoints of reducing the residual solvent amount and inhibiting thermal deterioration, is more preferably 50 to 100°C. The temperature of the rubber-like block copolymer in the molding is preferably 30°C or more because favorable moldability is thus obtained, and on the other hand, the temperature is preferably 120°C or less because gel formation otherwise caused by thermal deterioration of the rubber-like block copolymer can be thus inhibited.

As the temperature and the pressure in the molding are higher, the specific surface area of the resultant bale is smaller.

A pressure holding time in the molding is preferably 3 to 30 seconds, and more preferably 5 to 20 seconds. When the pressure holding time in the compression is 30 seconds or less, production efficiency is high, and when it is 5 seconds or more, moldability is good.

In order to avoid molded articles from coming to close contact with one another, the molded article is preferably packaged in a resin film (packaging sheet).

The type of the resin of the film is not especially limited, and examples include polyethylene, an ethylene copolymer resin, polystyrene, high impact polystyrene, and PET.

From the viewpoints of handleability of the molded article during transport, and difficulty in occurrence of condensation between the packaging sheet and the bale, the packaging sheet preferably has good adhesiveness.

The molded article is contained in a container for transport. An expansion rate of the molded article obtained 1 day after the molding is preferably less than 5% because it can be thus favorably held in the container.

[Rubber Composition and Crosslinking Rubber Composition]

A method for producing a filler-containing rubber composition of the present embodiment preferably includes a step of kneading the molded bale of the rubber-like block copolymer described above with a filler.

A method for producing a silica-containing rubber composition of the present embodiment preferably includes a step of kneading the molded bale of the rubber-like block copolymer described above with silica.

A method for producing a rubber composition of the present embodiment preferably includes a step of kneading a rubber component containing the molded bale of the rubber-like block copolymer described above, and 0.1 parts by mass or more and 20 parts by mass or less of a crosslinking agent based on 100 parts by mass of the rubber component.

The crosslinking agent is not especially limited, examples include crosslinking agents described below, and at least one selected from the group consisting of an organic peroxide, an azo compound, and a sulfur compound is preferred.

It is preferable that a filler is kneaded in the kneading step. The filler used here is not especially limited, and examples include fillers described below.

The rubber component preferably contains an additional rubber component in addition to the rubber-like block copolymer.

The additional rubber component is not especially limited, examples include additional rubber components described below, and at least one selected from the group consisting of a polybutadiene rubber, a natural rubber, and an ethylene-vinyl acetate copolymer is preferred.

A rubber composition and a crosslinking rubber composition of the present embodiment contains the molded bale of the rubber-like block copolymer.

The rubber composition of the present embodiment may be used without crosslinking, but from the viewpoint of higher mechanical strength and the like, it is preferable that a crosslinking rubber composition is produced by adding a crosslinking agent thereto to obtain a crosslinked product by crosslinking so that the resultant can be used in various applications.

The rubber composition and the crosslinking rubber composition of the present embodiment contain at least the molded bale of the rubber-like block copolymer of the present embodiment, and can further contain, if necessary, an additional rubber, a filler, a crosslinking agent, and the like.

The additional rubber is not especially limited and can be appropriately selected in accordance with the purpose, and examples include a styrene-butadiene rubber (of emulsion polymerization type or solution polymerization type), a natural rubber, polyisoprene, a butadiene rubber (such as high cis polybutadiene, low cis polybutadiene, syndiotactic 1,2-polybutadiene, and an acrylonitrile-butadiene rubber (NBR)), a chloroprene rubber, an ethylene-$\alpha$-olefin copolymer rubber such as an ethylene-propylene rubber (EPM), an ethylene-propylene-diene rubber (EPDM), a butyl rubber, a polysulfide rubber, a silicone rubber, a fluororubber, a urethane rubber, an ethylene-vinyl acetate copolymer, and a rubber-like polymer that does not contain the two polymer blocks (a) and (b), and has an iodine value of 3 to 250, an ethylene structure of 3% by mass or more, and a vinyl aromatic monomer block of less than 10% by mass. Such a rubber is preferably in a bale shape. One of these may be singly used, or a mixture of two or more of these may be used. For obtaining the mixture, dry polymers may be mixed after polymerization, or polymers may be mixed in a solution state

during polymerization.

It is preferable to use, among these rubbers, a natural rubber, a high cis polybutadiene, and an ethylene-vinyl acetate copolymer together from the viewpoints of economic efficiency and tensile strength of the rubber composition.

In the rubber composition and the crosslinking rubber composition of the present embodiment, when an additional rubber is contained in the rubber-like block copolymer, a mass ratio of the rubber-like block copolymer/additional rubber, which can be appropriately selected in accordance with required properties, is preferably 20/80 to 100/0, and more preferably 30/70 to 90/10.

The rubber composition and the crosslinking rubber composition of the present embodiment contain a resin in an amount of preferably 3 to 40 parts by mass from the viewpoints of tensile strength and tensile elongation, and more preferably 5 parts by mass or more, and further preferably 10 parts by mass or more from the viewpoint of tensile energy based on 100 parts by mass of the rubber component in the rubber composition. On the other hand, the rubber composition and the crosslinking rubber composition of the present embodiment contain the resin in an amount of preferably 30 parts by mass or less, and more preferably 25 parts by mass or less based on 100 parts by mass of the rubber component in the rubber composition from the viewpoint of ease in mixing the rubber composition.

The resin used in the present embodiment is a compound that is a solid at room temperature (23°C), and substantially contains carbon and hydrogen as bases (and can contain another atom).

The resin is not especially limited, and examples include aliphatic, alicyclic, aromatic, and hydrogenated aromatic resins, and aliphatic/aromatic resins capable of using aliphatic and/or aromatic monomers as bases. The resin may be a petroleum resin, or a natural or synthetic resin different from a petroleum resin.

Specific examples of the resin are not especially limited, and include hydrocarbon resins selected from the group consisting of cyclopentadiene (CPD) homopolymer or copolymer resins, dicyclopentadiene (DCPD) homopolymer or copolymer resins, terpene homopolymer or copolymer resins, C5 fraction homopolymer or copolymer resins, C9 fraction homopolymer or copolymer resins, $\alpha$-methylstyrene homopolymer or copolymer resins, and a blend of any of these resins. More specifically, among the above-described copolymer resins, although not especially limited, a copolymer selected from the group consisting of (D)CPD/vinyl aromatic copolymer resins, (D)CPD/terpene copolymer resins, terpene/phenol copolymer resins, (D)CPD/C5 fraction copolymer resins, (D)CPD/C9 fraction copolymer resins, terpene/vinyl aromatic copolymer resins, terpene/phenol copolymer resins, C5 fraction/vinyl aromatic copolymer resins, and a blend of any of these resins is preferred.

One of these resins may be singly used, or two or more of these may be used together.

From the viewpoints of tensile strength and tensile elongation, the resin has a glass transition temperature of preferably 30°C or more, and more preferably 40°C or more. On the other hand, from the viewpoint of ease in mixing of the crosslinking rubber composition, the glass transition temperature of the resin is preferably 100°C or less, and more preferably 80°C or less.

The rubber composition and the crosslinking rubber composition of the present embodiment preferably contains a filler from the viewpoint of improvement of a reinforcing property.

The filler is not especially limited, and examples include carbon black, silica, aluminum hydroxide, clay, alumina, talc, mica, kaolin, glass balloon, glass bead, calcium carbonate, magnesium carbonate, magnesium hydroxide, magnesium oxide, titanium oxide, potassium titanate, and barium sulfate. Among these, carbon black is preferably used. One of these may be singly used, or two or more of these may be used together.

The carbon black is not especially limited, and can be appropriately selected in accordance with the purpose, and examples include FEF, GPF, SRF, HAF, N339, IISAF, ISAF, and SAF. One of these may be singly used, or two or more of these may be used together.

From the viewpoints of strength and processability of the rubber composition, the silica has a nitrogen adsorption specific surface area obtained by a BET adsorption method of preferably 170 to 300 $mm^2/g$, and more preferably 200 to 300 $mm^2/g$.

From the viewpoint of strength of the rubber composition, the carbon black is preferably a carbon black having a nitrogen adsorption specific surface area of 50 mg/g or more, and dibutyl phthalate (DBP) absorption of 80 mL/100 g or more.

It is noted that the nitrogen adsorption specific surface area mentioned here is measured by a method in accordance with JIS K6217, and the DBP absorption is measured by a method in accordance with ASTM D2414.

From the viewpoint of a reinforcing property, the silica is preferred, and a silica content is preferably larger than a carbon black content.

Among silicas, precipitated silica is more preferred.

In the rubber composition and the crosslinking rubber composition of the present embodiment, an amount of the filler compounded is not especially limited, but can be appropriately selected in accordance with the purpose, and is preferably 10 to 130 parts by mass, and more preferably 30 to 90 parts by mass based on 100 parts by mass of the rubber component. When the amount of the filler to be compounded is 10 parts by mass or more, the effect of improving a reinforcing property resulting from compounding the filler can be obtained, and when the amount is 130 parts by mass

or less, deterioration of processability and moldability of the rubber composition can be avoided.

From the viewpoints of improvement of dispersibility of the filler and tensile property strength of a crosslinked product, the rubber composition and the crosslinking rubber composition of the present embodiment may contain a silane coupling agent. The silane coupling agent is preferably a compound that has a function to make close the interaction between the rubber component and the inorganic filler, has a group having affinity with or a binding property to each of the rubber component and a filler, and contains, in one molecule, a sulfur bond portion and an alkoxysilyl group or silanol group portion. Examples of such a compound include, but are not limited to, bis-[3-(triethoxysilyl)-propyl]-tetrasulfide, bis-[3-(triethoxysilyl)-propyl]-disulfide, bis-[2-(triethoxysilyl)-ethyl]-tetrasulfide, S-[3-(triethoxysilyl)-propyl]octanethioate, a condensate of S-[3-(triethoxysilyl)-propyl]octanethioate and [(triethoxysilyl)-propyl]thiol, and a silane carrying at least one thiol (-SH) functional group (referred to as mercaptosilane) and/or at least one masked thiol group.

A content of the silane coupling agent in the crosslinking rubber composition of the present embodiment is preferably 0.1 parts by mass or more and 30 parts by mass or less, more preferably 0.5 parts by mass or more and 20 parts by mass or less, and further preferably 1.0 part by mass or more and 15 parts by mass or less based on 100 parts by mass of the filler. When the content of the silane coupling agent falls in this range, there is a tendency that the effect attained by the addition of the silane coupling agent can be made further remarkable.

In the crosslinking rubber composition of the present embodiment, a crosslinking agent can be used if necessary. The crosslinking agent is not especially limited, and can be appropriately selected in accordance with the purpose, and examples include a sulfur-based crosslinking agent, an organic peroxide-based crosslinking agent, an inorganic crosslinking agent, a polyamine crosslinking agent, a resin crosslinking agent, a sulfur compound-based crosslinking agent, an oxime-nitrosamine-based crosslinking agent, an azo compound-based crosslinking agent, and a polyphosphate compound-based crosslinking agent, and these may be used together. It is noted that a sulfur-based crosslinking agent (vulcanizing agent) is more preferably used among these in a rubber composition for a tire. In particular, sulfur is further more preferred.

A content of the crosslinking agent in the crosslinking rubber composition of the present embodiment is preferably 0.1 parts by mass or more and 20 parts by mass or less based on 100 parts by mass of the rubber component. The content of the crosslinking agent is preferably 0.1 parts by mass or more, more preferably 0.5 parts by mass or more, and further preferably 1.5 parts by mass or more based on 100 parts by mass of the rubber component from the viewpoints of high tensile strength and a high crosslinking speed. On the other hand, from the viewpoints of inhibition of uneven crosslinking and high tensile strength, the content is preferably 20 parts by mass or less. It is more preferably 5 parts by mass or less, and further preferably 3 parts by mass or less.

In the crosslinking rubber composition of the present embodiment, a vulcanization accelerator can be further used together with the vulcanizing agent.

Examples of the vulcanization accelerator include, but are not limited to, guanidine-based, aldehyde-amine-based, aldehyde-ammonia-based, thiazole-based, sulfenamide-based, thiourea-based, thiuram-based, dithiocarbamate-based, and xanthate-based compounds.

In the crosslinking rubber composition of the present embodiment, various additives such as an additional softener and an additional filler excluding those described above, a heat stabilizer, an antistatic agent, a weathering stabilizer, an anti-aging agent, a colorant, and a lubricant may be used. As the additional softener, any of known softeners can be used. Examples of the additional filler include, specifically, but are not limited to, calcium carbonate, magnesium carbonate, aluminum sulfate, and barium sulfate. As the heat stabilizer, the antistatic agent, the weathering stabilizer, the anti-aging agent, the colorant, and the lubricant, any of known materials can be respectively used.

(Method for Kneading Crosslinking Rubber Composition)

Examples of a method for mixing the rubber component, a silica-based inorganic filler, carbon black or another filler, a silane coupling agent, and an additive such as a rubber softener include, but are not limited to, a melt kneading method using a general mixer such as an open roll, a Banbury mixer, a kneader, a single screw extruder, a double screw extruder, or a multi-screw extruder, and a method in which the respective components are dissolved to be mixed, and then a solvent is removed by heating. Among these, a melt kneading method using a roll, a Banbury mixer, a kneader or an extruder is preferred from the viewpoints of productivity and good kneadability. Besides, either of a method in which the rubber component, and the other components of a filler, a silane coupling agent and an additive are kneaded all at once, and a method in which these are mixed dividedly plural times can be applied.

(Application)

The rubber composition of the present embodiment is preferably used as a crosslinking rubber composition, and is applicable to tire members, interiors and exteriors of vehicles, anti-vibration rubbers, belts, shoes, foam materials, copper clad laminates, cable gels, and various industrial products.

Among these, the rubber composition is suitably used in a shoe sole or a tire member.

A method for producing a shoe sole of the present embodiment includes a step of molding the rubber composition obtained by the above-described method.

A specific example of the method for producing the shoe sole of the present embodiment is not especially limited, and includes a method in which a rubber composition containing a rubber component, silica, a silane coupling agent and an additive is kneaded. As the rubber component, it is preferable to compound 10 to 30 parts by mass of the rubber-like block copolymer from the viewpoint of grip performance, 60 to 70 parts by mass of high cis polybutadiene from the viewpoint of abrasion resistance, and 10 to 20 parts by mass of a polyisoprene rubber from the viewpoint of tear strength. The kneading of the rubber composition is usually performed preferably at 120 to 160°C. Furthermore, sulfur and a vulcanization accelerator are mixed and kneaded. A temperature at this point is preferably lower than 120°C. It is preferable to further add a foaming agent to the rubber composition. Next, the resultant composition is put in a prescribed mold to be foamed by increasing the temperature, or molded into an arbitrary shape with an extruder and then foamed by heating in a heating bath, and thus, vulcanization occurs simultaneously with the foaming, so that a shoe sole member can be obtained. A vulcanization temperature is preferably 140 to 180°C, and a vulcanization time is preferably 5 to 30 minutes.

The shoe sole member is preferably a midsole or an outsole, and more preferably an outsole.

Besides, the molded bale of the rubber-like block copolymer of the present embodiment has high strength, and hence a foaming ratio is high, and therefore, a lighter sole can be produced.

As a composition of the crosslinking rubber composition in producing a shoe sole, for example, a composition described in Examples below can be employed.

A method for producing a tire tread of the present embodiment includes a step of molding the rubber composition obtained by the above-described method.

A method for producing a tire sidewall of the present embodiment includes a step of molding the rubber composition obtained by the above-described method.

A specific example of a method for producing a tire is not especially limited but includes a method in which the rubber composition containing a rubber component, carbon black, silica, a silane coupling agent and an additive is kneaded. As the rubber component, it is preferable to compound 60 to 80 parts by mass of the rubber-like block copolymer from the viewpoints of grip performance and fuel economy, 10 to 30 parts by mass of high cis polybutadiene from the viewpoint of abrasion resistance, and 10 to 20 parts by mass of a natural rubber from the viewpoint of tear strength.

The kneading of the rubber composition is usually performed preferably at 100 to 180°C. Furthermore, sulfur and a vulcanization accelerator are mixed and kneaded. A temperature at this point is preferably lower than 120°C.

A molding method is not especially limited, and an example includes a method in which members usually used in tire production, such as a carcass layer including at least one selected from the group consisting of an unvulcanized crosslinking rubber composition and a tire cord, a belt layer, and a tread layer, are successively overlayed on a tire forming drum to adhere to one another, and the drum is pulled out to obtain a green tire. Subsequently, the green tire is vulcanized by heating by an ordinary method, and thus, a desired tire (such as a pneumatic tire) can be produced. The vulcanization temperature is preferably 140 to 190°C, and the vulcanization time is preferably 5 to 15 minutes.

As the tire members, these compositions can be used in various tires such as a fuel efficient tire, an all-season tire, a high performance tire, a snow tire, and a studless tire; and various portions of a tire such as a tread, a carcass, a sidewall, and a bead portion. In particular, these compositions are excellent, in the form of a vulcanizate, in balance among abrasion resistance, fuel economy, wet skid resistance, and snow performance, and therefore, are suitably used, as the tire member, for a tire tread of a fuel efficient tire, a high performance tire, or a snow tire.

As a composition of the crosslinking rubber composition in producing the tire member, for example, a composition described in Examples below can be employed.

## Examples

The present embodiment will now be described in more detail with reference to specific Examples and Comparative Examples, and it is noted that the present embodiment is not limited to the following Examples and Comparative Examples at all.

Various physical properties of the Examples and Comparative Examples were measured by the following methods.

### (Weight Average Molecular Weight (Mw), Coupling Ratio, and Peak Area on Lowest Molecular Weight Side of Rubber-like Block Copolymer)

A chromatogram was measured with a GPC measuring apparatus including a series of three columns using a polystyrene-based gel as a filler, and a weight average molecular weight (Mw) of a rubber-like block copolymer was

obtained based on a calibration curve obtained using standard polystyrene.

As an eluent, tetrahydrofuran (hereinafter also referred to as "THF") containing 5 mmol/L triethylamine was used. As columns, a guard column: trade name "TSKguardcolumn Super H-H" manufactured by Tosoh Corporation, and columns: trade names "TSKgel Super H5000", "TSKgel Super H6000", and "TSKgel Super H7000" manufactured by Tosoh Corporation were used.

Under conditions of an oven temperature of 40°C and a THF flow rate of 0.6 mL/min, a refractive index (hereinafter also referred to as "RI") detector (trade name "HLC8020" manufactured by Tosoh Corporation) was used. A measurement solution was prepared by dissolving 10 mg of a measurement sample in 20 mL of THF, and 20 $\mu$L of the measurement solution was injected into the GPC measuring apparatus for measurement.

A coupling ratio of the rubber-like block copolymer, and a peak area on the lowest molecular weight side (a peak area of a peak having the lowest molecular weight) were calculated, when a chromatogram had two or more peaks, based on a ratio between an area of a peak not coupled (peak on the lowest molecular weight side) and an area of a peak coupled (peak on a high molecular weight side). At this point, a peak lower than 5% by mass in a GPC curve was not counted as the number of peaks, and was not calculated for a coupling ratio because such a peak less affects easy mixture.

(Molecular Weight of Aromatic Vinyl Monomer Block (Polymer Block (a)))

A rubber-like block copolymer before hydrogenation was used as a sample to decompose the polymer by a method of Kolthoff (method described in I. M. KOLTHOFF, et al., J. Polym. Sci. 1, 429 (1946)). A molecular weight of polystyrene insoluble in methanol (weight average molecular weight of a styrene block) was measured in the same manner as the weight average molecular weight of the rubber-like block copolymer described above.

(Mooney Viscosity of Rubber-like Block Copolymer)

A Mooney viscosity of the rubber-like block copolymer was measured with a Mooney viscometer (trade name "VR1132" manufactured by Ueshima Seisakusho Co., Ltd.) with an L rotor used and in accordance with ISO 289.

A measurement temperature was set to 100°C.

First, a sample was preheated for 1 minute at the test temperature, the rotor was rotated at 2 rpm, and torque was measured after 4 minutes to be defined as a Mooney viscosity ($ML_{(1+4)}$).

(Modification Ratio of Rubber-like Block Copolymer)

A modification ratio of a rubber-like block copolymer was measured by column adsorption GPC as follows. The measurement was performed by utilizing a characteristic that a rubber-like block copolymer modified with a nitrogen atom-containing functional group adsorbs onto a column.

A sample solution containing a sample and low molecular weight internal standard polystyrene was measured for an amount of adsorption to a silica-based column based on a difference between a chromatogram measured with a polystyrene-based column and a chromatogram measured with the silica-based column, and thus, a modification ratio of the rubber-like block copolymer was obtained.

Specifically, the modification ratio of the rubber-like block copolymer was obtained as follows.

Preparation of Sample Solution: 10 mg of a sample and 5 mg of standard polystyrene were dissolved in 20 mL of THF, and the resultant was used as a sample solution.

THF containing 5 mmol/L of triethylamine was used as an eluent, and 20 $\mu$L of the sample solution was injected into an apparatus for measurement. As columns, a guard column: trade name "TSKguardcolumn Super H-H" manufactured by Tosoh Corporation and columns: trade names "TSKgel Super H5000", "TSKgel Super H6000", and "TSKgel Super H7000" manufactured by Tosoh Corporation were used. Under conditions of an oven temperature of 40°C and a THF flow rate of 0.6 mL/min, an RI detector (trade name "HLC8020" manufactured by Tosoh Corporation) was used for the measurement to obtain a chromatogram.

GPC Measurement Conditions using Silica-based Column: An apparatus, trade name "HLC-8320GPC" manufactured by Tosoh Corporation was used, THF was used as an eluent, and 50 $\mu$L of a sample solution was injected into the apparatus. Under conditions of an oven temperature of 40°C and a THF flow rate of 0.5 mL/min, an RI detector was used to obtain a chromatogram. As columns, trade names "Zorbax PSM-1000S", "PSM-300S", and "PSM-60S" in series were used, and a column, trade name "DIOL 4.6 $\times$ 12.5 mm 5 micron" was connected as a guard column at a previous stage.

Calculation Method for Modification Ratio: A modification ratio (%) was obtained in accordance with the following equation assuming that a whole peak area of the chromatogram obtained with the polystyrene-based column is 100, that a peak area of the sample is P1, that a peak area of the standard polystyrene is P2, that a whole peak area of the

chromatogram obtained with the silica-based column is 100, that a peak area of the sample is P3, and that a peak area of the standard polystyrene is P4:

$$\text{Modification ratio (\%)} = [1 - (P2 \times P3)/(P1 \times P4)] \times 100$$

wherein P1 + P2 = P3 + P4 = 100.

(Iodine Value of Rubber-like Block Copolymer)

The iodine value of a rubber-like block copolymer was calculated in accordance with a method described in "JIS K 0070: 1992".

(Amount of Bound Styrene (Content of Vinyl Aromatic Monomer Unit), Proportion of Ethylene Structure, α-Olefin Content, and Content of Conjugated Diene Structure in Rubber-like Block Copolymer)

A rubber-like block copolymer was used as a sample to measure, by $^1$H-NMR measurement, an amount of bound styrene, a proportion of an ethylene structure, an α-olefin content, and a proportion of a conjugated diene structure. Measurement conditions for the $^1$H-NMR measurement were as follows:

(Measurement Conditions)

Apparatus: JNM-LA400 (manufactured by JEOL Ltd.)
Solvent: deuterated chloroform
Measurement sample: rubber-like block copolymer or polymer block
Sample concentration: 50 mg/mL
Observation frequency: 400 MHz
Chemical shift reference: TMS (tetramethylsilane)
Pulse delay: 2.904 sec
Number of scans: 64
Pulse width: 45°
Measurement temperature: 26°C

(Content of Styrene Block (Proportion of Vinyl Aromatic Monomer Block) in Rubber-like Block Copolymer)

Assuming that a chain of eight or more styrene structure units was defined as a styrene block, the proportion thereof was obtained as follows. Based on a $^1$H-NMR spectrum measured at 400 MHz with deuterated chloroform used as a solvent, a ratio of an integrated value of the following (X) in each chemical shift range was obtained, and thus, the content of the styrene block contained in the rubber-like block copolymer was obtained.
(X) Chain of eight or more aromatic vinyl compounds: $6.00 \leq S < 6.68$

(Ratio Between Proportion of Vinyl Aromatic Monomer Block and Content of Vinyl Aromatic Monomer Unit)

Based on the proportion of a vinyl aromatic monomer block (hereinafter abbreviated as "BS") and the content of a vinyl aromatic monomer unit (hereinafter abbreviated as "TS") measured as described above, a ratio therebetween (BS/TS) was obtained.

(Water Content)

As for a water content in a molded bale, a molded bale 24 hours after the molding was cut in half, a portion of the rubber-like block copolymer in the vicinity of the center was heated with a halogen moisture meter at 150°C for 8 minutes, and the water content was calculated based on an amount of mass reduction thus obtained.

$$\text{Water content (mass\%)} = \text{amount of mass reduction of rubber-like block copolymer through heating/mass of rubber-block copolymer before heating} \times 100$$

(Residual Solvent Amount)

A residual solvent amount in the molded bale was analyzed with a headspace analysis system. As an analysis apparatus, a headspace sampler (manufactured by Agilent Technologies, "G1888") and a gas chromatography (manufactured by Agilent Technologies, "6890N") were used. The molded bale 24 hours after the molding was cut in half, 0.1 g of the rubber-like block copolymer taken in the vicinity of the center was sealed in a 20 mL headspace bottle, the resultant was heated in the headspace sampler at 150°C for 30 minutes, and 1 mL of a gas phase portion obtained after the heating was injected into a gas chromatograph (GC). A calibration curve of a hexane concentration precedently created was used to obtain, in terms of hexane, an amount of each volatile component thus generated.

(Cold Flow Resistance)

Cold flow resistance of the molded bale was calculated as a thickness change (%) in accordance with the following expression based on a thickness (H60) obtained after leaving the molded bale for 72 hours at an external temperature of 25°C at a humidity of 50% with a load of 5 kg applied thereto:

$$\text{Thickness change (\%)} = (H0 - H60) \times 100/H0$$

H0 represents a thickness of the bale immediately after the molding.

A smaller thickness change (index) indicates that the rubber bale under storage has lower cold flow and is excellent in handleability.

When the index was smaller than 10, it was evaluated as ◎, when the index was 10 or larger and smaller than 20, it was evaluated as O, when the index was 20 or larger and smaller than 40, it was evaluated as △, and when the index was 40 or larger, it was evaluated as ×.

The cold flow resistance is practically sufficient when the index is smaller than 40, and the index is preferably smaller than 20.

(Preparation of Hydrogenation Catalyst)

A hydrogenation catalyst used in preparing a rubber-like block copolymer in each of the Examples and Comparative Examples described below was prepared as follows.

(Production Example 1)

A nitrogen-substituted reaction vessel was charged with 1 L of dried and purified cyclohexane, and 100 mmol of bis(η5-cyclopentadienyl)titanium dichloride was added thereto. Under sufficient stirring, a n-hexane solution containing 200 mmol of trimethyl aluminum was added thereto to be reacted for about 3 days at room temperature, and thus, a hydrogenation catalyst (TC-1) was obtained.

(Polymerization of Rubber-like Block Copolymer)

(Polymerization Example 1) Rubber-like Block Copolymer (Polymer 1)

A temperature-controllable autoclave having an internal capacity of 40 L and equipped with a stirrer and a jacket was used as a reactor, and the reactor was charged with 3,216 g of 1,3-butadiene, 1,084 g of styrene, and 25,800 g of cyclohexane, from which impurities had been precedently removed, and 3.10 g of tetrahydrofuran (THF) used as a polar substance, and the temperature within the reactor was kept at 45°C. Besides, as a polymerization initiator, 4.10 g of n-butyllithium was supplied to the reactor to start a polymerization reaction.

After starting the polymerization reaction, the temperature within the reactor started to increase due to heat generation through polymerization, and the temperature within the reactor finally reached 85°C.

After monomer conversion within the reactor reached 99%, 2.05 g of methanol was added to the resultant polymer solution as a reaction terminator, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 50 minutes, and thus, a rubber-like block copolymer (polymer 1) was obtained. The rubber-like block copolymer thus obtained (polymer 1) had an iodine value of 40.

To a solution of the thus obtained rubber-like block copolymer (polymer 1), 12.6 g of n-octadecyl-3-(3,5-di-t-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 1) are shown in Table 1. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 1) was the following block II:
Block II: A block having a content of a vinyl aromatic monomer unit of 80% by mass or less and containing the vinyl aromatic monomer unit, an ethylene structure, a conjugated diene structure, and an α-olefin structure.

(Polymerization Example 2) Rubber-like Block Copolymer (Polymer 2)

After starting the polymerization reaction in the same manner as in Polymerization Example 1, after monomer conversion within the reactor reached 99%, 4.4 g of dimethyldimethoxysilane was added to the resultant polymer solution to perform a coupling reaction for 20 minutes. To the resultant polymer solution, 0.8 g of methanol was added as a reaction terminator, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 50 minutes, and thus, a rubber-like block copolymer (polymer 2) was obtained. The rubber-like block copolymer thus obtained (polymer 2) had an iodine value of 48.

To a solution of the thus obtained rubber-like block copolymer (polymer 2), 12.6 g of n-octadecyl-3-(3,5-di-t-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 2) are shown in Table 1. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 2) was the following block II:
Block II: A block having a content of a vinyl aromatic monomer unit of 80% by mass or less and containing the vinyl aromatic monomer unit, an ethylene structure, a conjugated diene structure, and an α-olefin structure.

(Polymerization Example 3) Rubber-like Block Copolymer (Polymer 3)

After starting the polymerization reaction in the same manner as in Polymerization Example 1, after monomer conversion within the reactor reached 99%, 11.2 g of 3-(4-methylpyperazin-1-yl)propyltriethoxysilane was added to the resultant polymer solution to perform a coupling reaction for 20 minutes. To the resultant polymer solution, 0.8 g of methanol was added as a reaction terminator, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 50 minutes, and thus, a rubber-like block copolymer (polymer 3) was obtained. The rubber-like block copolymer thus obtained (polymer 3) had an iodine value of 54.

To a solution of the thus obtained rubber-like block copolymer (polymer 3), 12.6 g of n-octadecyl-3-(3,5-di-t-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 3) are shown in Table 1. A ratio between the polymer block (a) and the polymer block (b), and proportions (mass%) of respective components were calculated based on proportions (mass%) of the respective components in the rubber-like block copolymer, and the content of the styrene block in the rubber-like block copolymer. The rubber-like block copolymer (polymer 3) contained a nitrogen atom.

At least one block at a molecular end in the rubber-like block copolymer (polymer 3) was the following block II: Block II: A block having a content of a vinyl aromatic monomer unit of 80% by mass or less and containing the vinyl aromatic monomer unit, an ethylene structure, a conjugated diene structure, and an $\alpha$-olefin structure.

(Polymerization Example 4) Rubber-like Block Copolymer (Polymer 4)

A temperature-controllable autoclave having an internal capacity of 40 L and equipped with a stirrer and a jacket was used as a reactor, and the reactor was charged with 2,330 g of 1,3-butadiene, 1,694 g of styrene, and 25,800 g of cyclohexane, from which impurities had been precedently removed, and 3.10 g of tetrahydrofuran (THF) and 2.41 g of 2,2-bis(2-oxolanyl)propane used as polar substances, and the temperature within the reactor was kept at 35°C. Besides, as a polymerization initiator, 2.42 g of n-butyllithium was supplied to the reactor to start a polymerization reaction.

After starting the polymerization reaction, the temperature within the reactor started to increase due to heat generation through polymerization, and 5 minutes after monomer conversion within the reactor reached 99%, 276 g of styrene was added thereto to further perform a reaction.

The temperature within the reactor finally reached 82°C. 2 minutes after reaching this reaction temperature peak, 1.21 g of methanol was added as a reaction terminator, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 60 minutes, and thus, a rubber-like block copolymer (polymer 4) was obtained. The rubber-like block copolymer thus obtained (polymer 4) had an iodine value of 16.

To a solution of the thus obtained rubber-like block copolymer (polymer 4), 12.6 g of n-octadecyl-3-(3,5-di-t-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 4) are shown in Table 1. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 4) was the following block II: Block II: A block having a content of a vinyl aromatic monomer unit of 80% by mass or less and containing the vinyl aromatic monomer unit, an ethylene structure, a conjugated diene structure, and an $\alpha$-olefin structure.

(Polymerization Example 5) Rubber-like Block Copolymer (Polymer 5)

After starting the polymerization reaction in the same manner as in Polymerization Example 4 except that 4.68 g of n-butyllithium was added as a polymerization initiator and 4.67 g of 2,2-bis(2-oxolanyl)propane was added as a polar substance, the monomers were similarly added, and after monomer conversion within the reactor reached 99%, 8.3 g of 3-(4-methylpiperazin-1-yl)propyltriethoxysilane was added to the resultant polymer solution to perform a coupling reaction for 20 minutes. To the resultant polymer solution, 0.6 g of methanol was added as a reaction terminator, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared as described above Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 60 minutes, and thus, a rubber-like block copolymer (polymer 5) was obtained. The rubber-like block copolymer thus obtained (polymer 5) had an iodine value of 20.

To a solution of the thus obtained rubber-like block copolymer (polymer 5), 12.6 g of n-octadecyl-3-(3,5-di-t-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 5) are shown

in Table 1. A ratio between the polymer block (a) and the polymer block (b), and proportions (mass%) of respective components were calculated based on proportions (mass%) of the respective components in the rubber-like block copolymer, and the content of the styrene block in the rubber-like block copolymer. The rubber-like block copolymer (polymer 5) contained a nitrogen atom.

At least one block at a molecular end in the rubber-like block copolymer (polymer 5) was the following block II: Block II: A block having a content of a vinyl aromatic monomer unit of 80% by mass or less and containing the vinyl aromatic monomer unit, an ethylene structure, a conjugated diene structure, and an α-olefin structure.

(Polymerization Example 6) Rubber-like Block Copolymer (Polymer 6)

A temperature-controllable autoclave having an internal capacity of 40 L and equipped with a stirrer and a jacket was used as a reactor, and the reactor was charged with 3,880 g of 1,3-butadiene, 420 g of styrene, and 25,800 g of cyclohexane, from which impurities had been precedently removed, and 3.10 g of tetrahydrofuran (THF) used as a polar substance, and the temperature within the reactor was kept at 45°C. Besides, as a polymerization initiator, 4.89 g of n-butyllithium was supplied to the reactor to start a polymerization reaction.

After starting the polymerization reaction, after monomer conversion within the reactor reached 99%, 2.44 g of methanol was added as a reaction terminator, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 50 minutes, and thus, a rubber-like block copolymer (polymer 6) was obtained. The rubber-like block copolymer thus obtained (polymer 6) had an iodine value of 106.

To a solution of the thus obtained rubber-like block copolymer (polymer 6), 12.6 g of n-octadecyl-3-(3,5-di-t-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 6) are shown in Table 1. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 6) was the following block II: Block II: A block having a content of a vinyl aromatic monomer unit of 80% by mass or less and containing the vinyl aromatic monomer unit, an ethylene structure, a conjugated diene structure, and an α-olefin structure.

(Polymerization Example 7) Rubber-like Block Copolymer (Polymer 7)

A temperature-controllable autoclave having an internal capacity of 40 L and equipped with a stirrer and a jacket was used as a reactor, and the reactor was charged with 2,477 g of 1,3-butadiene, 1,823 g of styrene, and 25,800 g of cyclohexane, from which impurities had been precedently removed, and 3.10 g of tetrahydrofuran (THF) used as a polar substance, and the temperature within the reactor was kept at 45°C. Besides, as a polymerization initiator, 3.33 g of n-butyllithium was supplied to the reactor to start a polymerization reaction.

After starting the polymerization reaction, after monomer conversion within the reactor reached 99%, 1.66 g of methanol was added as a reaction terminator to the resultant polymer solution, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 50 minutes, and thus, a rubber-like block copolymer (polymer 7) was obtained. The rubber-like block copolymer thus obtained (polymer 7) had an iodine value of 46.

To a solution of the thus obtained rubber-like block copolymer (polymer 7), 12.6 g of n-octadecyl-3-(3,5-di-t-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 7) are shown in Table 1. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 7) was the following block II: Block II: A block having a content of a vinyl aromatic monomer unit of 80% by mass or less and containing the vinyl aromatic monomer unit, an ethylene structure, a conjugated diene structure, and an α-olefin structure.

(Polymerization Example 8) Rubber-like Block Copolymer (Polymer 8)

After starting the polymerization reaction in the same manner as in Polymerization Example 1, after monomer conversion within the reactor reached 99%, 2.05 g of methanol was added as a reaction terminator to the resultant polymer solution, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.
Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 30 minutes, and thus, a rubber-like block copolymer (polymer 8) was obtained. The rubber-like block copolymer thus obtained (polymer 8) had an iodine value of 208.
To a solution of the thus obtained rubber-like block copolymer (polymer 8), 12.6 g of n-octadecyl-3-(3,5-di-t-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 8) are shown in Table 1. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.
At least one block at a molecular end in the rubber-like block copolymer (polymer 8) was the following block II: Block II: A block having a content of a vinyl aromatic monomer unit of 80% by mass or less and containing the vinyl aromatic monomer unit, an ethylene structure, a conjugated diene structure, and an α-olefin structure.

(Polymerization Example 9) Rubber-like Block Copolymer (Polymer 9)

After starting the polymerization reaction in the same manner as in Polymerization Example 1 except that 6.91 g of 2,2-bis(2-oxolanyl)propane was further added as a polar substance, after monomer conversion within the reactor reached 99%, 2.05 g of methanol was added as a reaction terminator to the resultant polymer solution, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.
Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 30 minutes, and thus, a rubber-like block copolymer (polymer 9) was obtained. The rubber-like block copolymer thus obtained (polymer 9) had an iodine value of 172.
To a solution of the thus obtained rubber-like block copolymer (polymer 9), 12.6 g of n-octadecyl-3-(3,5-di-t-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 9) are shown in Table 1. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.
At least one block at a molecular end in the rubber-like block copolymer (polymer 9) was the following block II: Block II: A block having a content of a vinyl aromatic monomer unit of 80% by mass or less and containing the vinyl aromatic monomer unit, an ethylene structure, a conjugated diene structure, and an α-olefin structure.

(Polymerization Example 10) Rubber-like Block Copolymer (Polymer 10)

After starting the polymerization reaction in the same manner as in Polymerization Example 1 except that the amount of n-butyllithium used as a polymerization initiator to be added was changed to 1.68 g, after monomer conversion within the reactor reached 99%, 0.84 g of methanol was added as a reaction terminator to the resultant polymer solution, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.
Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 30 minutes, and thus, a rubber-like block copolymer (polymer 10) was obtained. The rubber-like block copolymer thus obtained (polymer 10) had an iodine value of 197.

To a solution of the thus obtained rubber-like block copolymer (polymer 10), 12.6 g of n-octadecyl-3-(3,5-dit-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 10) are shown in Table 1. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 10) was the following block II:
Block II: A block having a content of a vinyl aromatic monomer unit of 80% by mass or less and containing the vinyl aromatic monomer unit, an ethylene structure, a conjugated diene structure, and an $\alpha$-olefin structure.

(Polymerization Example 11) Rubber-like Block Copolymer (Polymer 11)

A temperature-controllable autoclave having an internal capacity of 40 L and equipped with a stirrer and a jacket was used as a reactor, and the reactor was charged with 3,655 g of 1,3-butadiene, and 25,800 g of cyclohexane, from which impurities had been precedently removed, and 3.10 g of tetrahydrofuran (THF) used as a polar substance, and the temperature within the reactor was kept at 35°C. Besides, as a polymerization initiator, 3.66 g of n-butyllithium was supplied to the reactor to start a polymerization reaction.

After starting the polymerization reaction, the temperature within the reactor started to increase due to heat generation through polymerization, and 5 minutes after monomer conversion within the reactor reached 99%, 645 g of styrene was added to further perform a reaction.

The temperature within the reactor finally reached 80°C. 2 minutes after reaching this reaction temperature peak, 1.83 g of methanol was added as a reaction terminator, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 50 minutes, and thus, a rubber-like block copolymer (polymer 11) was obtained. The rubber-like block copolymer thus obtained (polymer 11) had an iodine value of 128.

To a solution of the thus obtained rubber-like block copolymer (polymer 11), 12.6 g of n-octadecyl-3-(3,5-dit-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 11) are shown in Table 2. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 11) was the following block I:
Block I: A block containing an ethylene structure, a conjugated diene structure, and an $\alpha$-olefin structure

(Polymerization Example 12) Rubber-like Block Copolymer (Polymer 12)

A temperature-controllable autoclave having an internal capacity of 40 L and equipped with a stirrer and a jacket was used as a reactor, and the reactor was charged with 3,225 g of 1,3-butadiene, and 25,800 g of cyclohexane, from which impurities had been precedently removed, and 3.10 g of tetrahydrofuran (THF) used as a polar substance, and the temperature within the reactor was kept at 35°C. Besides, as a polymerization initiator, 3.15 g of n-butyllithium was supplied to the reactor to start a polymerization reaction.

After starting the polymerization reaction, the temperature within the reactor started to increase due to heat generation through polymerization, and 5 minutes after monomer conversion within the reactor reached 99%, 1075 g of styrene was added to further perform a reaction.

The temperature within the reactor finally reached 80°C. 2 minutes after reaching this reaction temperature peak, 1.57 g of methanol was added as a reaction terminator, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 50 minutes, and thus, a rubber-like block copolymer (polymer 12) was obtained. The rubber-like block copolymer thus obtained (polymer 12) had an iodine value of 113.

To a solution of the thus obtained rubber-like block copolymer (polymer 12), 12.6 g of n-octadecyl-3-(3,5-dit-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 12) are shown in Table 2. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 12) was the following block I: Block I: A block containing an ethylene structure, a conjugated diene structure, and an α-olefin structure

(Polymerization Example 13) Rubber-like Block Copolymer (Polymer 13)

A temperature-controllable autoclave having an internal capacity of 40 L and equipped with a stirrer and a jacket was used as a reactor, and the reactor was charged with 3,677 g of 1,3-butadiene, 366 g of styrene, and 25,800 g of cyclohexane, from which impurities had been precedently removed, and 3.10 g of tetrahydrofuran (THF) and 3.29 g of 2,2-bis(2-oxolanyl)propane used as polar substances, and the temperature within the reactor was kept at 35°C. Besides, as a polymerization initiator, 1.58 g of n-butyllithium was supplied to the reactor to start a polymerization reaction.

After starting the polymerization reaction, the temperature within the reactor started to increase due to heat generation through polymerization, and 5 minutes after monomer conversion within the reactor reached 99%, 258 g of styrene was added thereto to further perform a reaction.

The temperature within the reactor finally reached 85°C. 2 minutes after reaching this reaction temperature peak, 0.79 g of methanol was added as a reaction terminator, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 50 minutes, and thus, a rubber-like block copolymer (polymer 13) was obtained. The rubber-like block copolymer thus obtained (polymer 13) had an iodine value of 94.

To a solution of the thus obtained rubber-like block copolymer (polymer 13), 12.6 g of n-octadecyl-3-(3,5-dit-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 13) are shown in Table 2. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 13) was the following block II: Block II: A block having a content of a vinyl aromatic monomer unit of 80% by mass or less and containing the vinyl aromatic monomer unit, an ethylene structure, a conjugated diene structure, and an α-olefin structure.

(Polymerization Example 14) Rubber-like Block Copolymer (Polymer 14)

Polymerization was started in the same manner as in Polymerization Example 13 except that 5.54 g of 2,2-bis(2-oxolanyl)propane was used, and after starting a polymerization reaction, the temperature within the reactor started to increase due to heat generation through polymerization, and 5 minutes after monomer conversion within the reactor reached 99%, 258 g of styrene was added to further perform a reaction.

The temperature within the reactor finally reached 87°C. 2 minutes after reaching this reaction temperature peak, 0.79 g of methanol was added as a reaction terminator, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8

MPa and an average temperature of 85°C for 50 minutes, and thus, a rubber-like block copolymer (polymer 14) was obtained. The rubber-like block copolymer thus obtained (polymer 14) had an iodine value of 95.

To a solution of the thus obtained rubber-like block copolymer (polymer 14), 12.6 g of n-octadecyl-3-(3,5-dit-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 14) are shown in Table 2. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 14) was the following block II: Block II: A block having a content of a vinyl aromatic monomer unit of 80% by mass or less and containing the vinyl aromatic monomer unit, an ethylene structure, a conjugated diene structure, and an α-olefin structure.

(Polymerization Example 15) Rubber-like Block Copolymer (Polymer 15)

Polymerization was started in the same manner as in Polymerization Example 13 except that 8.89 g of 2,2-bis(2-oxolanyl)propane was used, and after starting a polymerization reaction, the temperature within the reactor started to increase due to heat generation through polymerization, and 5 minutes after monomer conversion within the reactor reached 99%, 258 g of styrene was added to further perform a reaction.

The temperature within the reactor finally reached 88°C. 2 minutes after reaching this reaction temperature peak, 0.79 g of methanol was added as a reaction terminator, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 50 minutes, and thus, a rubber-like block copolymer (polymer 15) was obtained. The rubber-like block copolymer thus obtained (polymer 15) had an iodine value of 97.

To a solution of the thus obtained rubber-like block copolymer (polymer 15), 12.6 g of n-octadecyl-3-(3,5-dit-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 15) are shown in Table 2. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 15) was the following block II: Block II: A block having a content of a vinyl aromatic monomer unit of 80% by mass or less and containing the vinyl aromatic monomer unit, an ethylene structure, a conjugated diene structure, and an α-olefin structure.

(Polymerization Example 16) Rubber-like Block Copolymer (Polymer 16)

A temperature-controllable autoclave having an internal capacity of 40 L and equipped with a stirrer and a jacket was used as a reactor, and the reactor was charged with 3,818 g of 1,3-butadiene, 353 g of styrene, and 25,800 g of cyclohexane, from which impurities had been precedently removed, and 3.10 g of tetrahydrofuran (THF) and 3.29 g of 2,2-bis(2-oxolanyl)propane used as polar substances, and the temperature within the reactor was kept at 35°C. Besides, as a polymerization initiator, 1.58 g of n-butyllithium was supplied to the reactor to start a polymerization reaction.

After starting the polymerization reaction, the temperature within the reactor started to increase due to heat generation through polymerization, and 5 minutes after monomer conversion within the reactor reached 99%, 129 g of styrene was added thereto to further perform a reaction.

The temperature within the reactor finally reached 83°C. 2 minutes after reaching this reaction temperature peak, 0.79 g of methanol was added as a reaction terminator, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 50 minutes, and thus, a rubber-like block copolymer (polymer 16) was obtained. The rubber-like block copolymer thus obtained (polymer 16) had an iodine value of 97.

To a solution of the thus obtained rubber-like block copolymer (polymer 16), 12.6 g of n-octadecyl-3-(3,5-dit-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 16) are shown in Table 2. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 16) was the following block II: Block II: A block having a content of a vinyl aromatic monomer unit of 80% by mass or less and containing the vinyl aromatic monomer unit, an ethylene structure, a conjugated diene structure, and an α-olefin structure.

(Polymerization Example 17) Rubber-like Block Copolymer (Polymer 17)

The polymerization was started in the same manner as in Polymerization Example 16, and 129 g of styrene was similarly additionally added to further perform a reaction. 2 minutes after reaching this reaction temperature peak, 2.16 g of 1,3-dimethyl-2-imidazolidinone was added to perform a modification reaction for 20 minutes. To the resultant polymer solution, 0.79 g of methanol was added as a reaction terminator, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 50 minutes, and thus, a rubber-like block copolymer (polymer 17) was obtained. The rubber-like block copolymer thus obtained (polymer 17) had an iodine value of 98.

To a solution of the thus obtained rubber-like block copolymer (polymer 17), 12.6 g of n-octadecyl-3-(3,5-dit-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 17) are shown in Table 2. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 17) was the following block II: Block II: A block having a content of a vinyl aromatic monomer unit of 80% by mass or less and containing the vinyl aromatic monomer unit, an ethylene structure, a conjugated diene structure, and an α-olefin structure.

(Polymerization Example 18) Rubber-like Block Copolymer (Polymer 18)

The polymerization was started in the same manner as in Polymerization Example 13, and 258 g of styrene was similarly additionally added to further perform a reaction. 2 minutes after reaching this reaction temperature peak, 1.40 g of 1,3-dimethyl-2-imidazolidinone was added to perform a modification reaction for 20 minutes. To the resultant polymer solution, 0.79 g of methanol was added as a reaction terminator, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 50 minutes, and thus, a rubber-like block copolymer (polymer 18) was obtained. The rubber-like block copolymer thus obtained (polymer 18) had an iodine value of 94.

To a solution of the thus obtained rubber-like block copolymer (polymer 18), 12.6 g of n-octadecyl-3-(3,5-dit-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 18) are shown in Table 2. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 18) was the following block II: Block II: A block having a content of a vinyl aromatic monomer unit of 80% by mass or less and containing the vinyl aromatic monomer unit, an ethylene structure, a conjugated diene structure, and an α-olefin structure.

(Polymerization Example 19) Rubber-like Block Copolymer (Polymer 19)

A polymer solution was obtained in the same manner as in Polymerization Example 18 except that the amount of 1,3-dimethyl-2-imidazolidinone to be added was changed to 2.11 g. To the resultant polymer solution, 0.79 g of methanol was added as a reaction terminator, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared as described above Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 50 minutes, and thus, a rubber-like block copolymer (polymer 19) was obtained. The rubber-like block copolymer thus obtained (polymer 19) had an iodine value of 94.

To a solution of the thus obtained rubber-like block copolymer (polymer 19), 12.6 g of n-octadecyl-3-(3,5-dit-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 19) are shown in Table 2. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 19) was the following block II: Block II: A block having a content of a vinyl aromatic monomer unit of 80% by mass or less and containing the vinyl aromatic monomer unit, an ethylene structure, a conjugated diene structure, and an α-olefin structure.

(Polymerization Example 20) Rubber-like Block Copolymer (Polymer 20)

A temperature-controllable autoclave having an internal capacity of 40 L and equipped with a stirrer and a jacket was used as a reactor, and the reactor was charged with 3,677 g of 1,3-butadiene, 366 g of styrene, and 25,800 g of cyclohexane, from which impurities had been precedently removed, 3.10 g of tetrahydrofuran (THF) and 3.29 g of 2,2-bis(2-oxolanyl)propane used as polar substances, and 1.68 g piperidine used as a modifier for a polymerization starting end, and the temperature within the reactor was kept at 35°C. Besides, as a polymerization initiator, 1.58 g of n-butyllithium was supplied to the reactor to start a polymerization reaction.

After starting the polymerization reaction, the temperature within the reactor started to increase due to heat generation through polymerization, and 5 minutes after monomer conversion within the reactor reached 99%, 258 g of styrene was added thereto to further perform a reaction.

The temperature within the reactor finally reached 85°C. 2 minutes after reaching this reaction temperature peak, 0.79 g of methanol was added as a reaction terminator, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 50 minutes, and thus, a rubber-like block copolymer (polymer 20) was obtained. The rubber-like block copolymer thus obtained (polymer 20) had an iodine value of 92.

To a solution of the thus obtained rubber-like block copolymer (polymer 20), 12.6 g of n-octadecyl-3-(3,5-dit-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 20) are shown in Table 2. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 20) was the following block II: Block II: A block having a content of a vinyl aromatic monomer unit of 80% by mass or less and containing the vinyl aromatic monomer unit, an ethylene structure, a conjugated diene structure, and an α-olefin structure.

(Polymerization Example 21) Rubber-like Block Copolymer (Polymer 21)

After starting a polymerization reaction in the same manner as in Polymerization Example 1, after monomer conversion within the reactor reached 99%, 2.05 g of methanol was added as a reaction terminator to the resultant

polymer solution to obtain a rubber-like block copolymer (polymer 21) before hydrogenation.

To a solution of the thus obtained rubber-like block copolymer (polymer 21), 12.6 g of n-octadecyl-3-(3,5-dit-butyl-4-hydroxyphenyl)-propionate and 3.0 g of 4,6-bis(octylthiomethyl)-o-cresol were added as antioxidants, and the resultant was subjected to a drying treatment. The rubber-like block copolymer thus obtained (polymer 21) had an iodine value of 352. Besides, the molecular weight of the aromatic vinyl monomer (styrene) block was measured by the above-described method. Analysis results of the rubber-like block copolymer (polymer 21) are shown in Table 3. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 21) was the following block II: Block II: A block having a content of a vinyl aromatic monomer unit of 80% by mass or less and containing the vinyl aromatic monomer unit, an ethylene structure, a conjugated diene structure, and an α-olefin structure.

(Polymerization Example 22) Rubber-like Block Copolymer (Polymer 22)

A temperature-controllable autoclave having an internal capacity of 40 L and equipped with a stirrer and a jacket was used as a reactor, and the reactor was charged with 2,412 g of 1,3-butadiene, 1,888 g of styrene, and 25,800 g of cyclohexane, from which impurities had been precedently removed, and 3.10 g of tetrahydrofuran (THF) used as a polar substance, and the temperature within the reactor was kept at 45°C. Besides, as a polymerization initiator, 3.29 g of n-butyllithium was supplied to the reactor to start a polymerization reaction.

After starting the polymerization reaction, the temperature within the reactor started to increase due to heat generation through polymerization, and the temperature within the reactor finally reached 85°C.

After monomer conversion within the reactor reached 99%, 1.6 g of methanol was added to the resultant polymer solution as a reaction terminator, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 50 minutes, and thus, a rubber-like block copolymer (polymer 22) was obtained. The rubber-like block copolymer thus obtained (polymer 22) had an iodine value of 49.

To a solution of the thus obtained rubber-like block copolymer (polymer 22), 12.6 g of n-octadecyl-3-(3,5-dit-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 22) are shown in Table 3. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 22) was the following block II: Block II: A block having a content of a vinyl aromatic monomer unit of 80% by mass or less and containing the vinyl aromatic monomer unit, an ethylene structure, a conjugated diene structure, and an α-olefin structure.

(Polymerization Example 23) Rubber-like Block Copolymer (Polymer 23)

After starting a polymerization reaction in the same manner as in Polymerization Example 4, after monomer conversion within the reactor reached 99%, 1.21 g of methanol was added as a reaction terminator to the resultant polymer solution to obtain a rubber-like block copolymer (polymer 23).

To a solution of the thus obtained rubber-like block copolymer (polymer 23), 12.6 g of n-octadecyl-3-(3,5-dit-butyl-4-hydroxyphenyl)-propionate and 3.0 g of 4,6-bis(octylthiomethyl)-o-cresol were added as antioxidants, and the resultant was subjected to a drying treatment. The rubber-like block copolymer thus obtained (polymer 23) had an iodine value of 255. Besides, the molecular weight of the aromatic vinyl monomer (styrene) block was measured by the above-described method. Analysis results of the rubber-like block copolymer (polymer 23) are shown in Table 3. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 23) was the following block II: Block II: A block having a content of a vinyl aromatic monomer unit of 80% by mass or less and containing the vinyl aromatic monomer unit, an ethylene structure, a conjugated diene structure, and an α-olefin structure.

(Polymerization Example 24) Rubber-like Block Copolymer (Polymer 24)

A temperature-controllable autoclave having an internal capacity of 40 L and equipped with a stirrer and a jacket was used as a reactor, and the reactor was charged with 3,096 g of 1,3-butadiene, 1,204 g of styrene, and 25,800 g of cyclohexane, from which impurities had been precedently removed, and 3.10 g of tetrahydrofuran (THF) and 12.64 g of 2,2-bis(2-oxolanyl)propane used as polar substances, and the temperature within the reactor was kept at 30°C. Besides, as a polymerization initiator, 3.48 g of n-butyllithium was supplied to the reactor to start a polymerization reaction.

After starting the polymerization reaction, the temperature within the reactor started to increase due to heat generation through polymerization, and the temperature within the reactor finally reached 83°C.

After monomer conversion within the reactor reached 99%, 1.74 g of methanol was added as a reaction terminator to the resultant polymer solution, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 60 minutes, and thus, a rubber-like block copolymer (polymer 24) was obtained. The rubber-like block copolymer thus obtained (polymer 24) had an iodine value of 101.

To a solution of the thus obtained rubber-like block copolymer (polymer 24), 12.6 g of n-octadecyl-3-(3,5-dit-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 24) are shown in Table 3. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 24) was the following block II: Block II: A block having a content of a vinyl aromatic monomer unit of 80% by mass or less and containing the vinyl aromatic monomer unit, an ethylene structure, a conjugated diene structure, and an α-olefin structure.

(Polymerization Example 25) Rubber-like Block Copolymer (Polymer 25)

After starting a polymerization reaction in the same manner as in Polymerization Example 3, after monomer conversion within the reactor reached 99%, 11.2 g of 3-(4-methylpepierazin-1-yl)propyltriethoxysilane was added to the resultant polymer solution to perform a coupling reaction for 20 minutes. To the resultant polymer solution, 0.8 g of methanol was added as a reaction terminator to obtain a rubber-like block copolymer (polymer 25).

To a solution of the thus obtained rubber-like block copolymer (polymer 25), 12.6 g of n-octadecyl-3-(3,5-dit-butyl-4-hydroxyphenyl)-propionate and 3.0 g of 4,6-bis(octylthiomethyl)-o-cresol were added as antioxidants, and the resultant was subjected to a drying treatment. The thus obtained rubber-like block copolymer (polymer 25) had an iodine value of 352. The molecular weight of the aromatic vinyl monomer (styrene) block was measured by the above-described method. Analysis results of the rubber-like block copolymer (polymer 25) are shown in Table 3. A ratio between the polymer block (a) and the polymer block (b), and proportions (mass%) of respective components were calculated based on proportions (mass%) of the respective components in the rubber-like block copolymer, and the content of the styrene block in the rubber-like block copolymer. The rubber-like block copolymer (polymer 25) contained a nitrogen atom.

At least one block at a molecular end in the rubber-like block copolymer (polymer 25) was the following block II: Block II: A block having a content of a vinyl aromatic monomer unit of 80% by mass or less and containing the vinyl aromatic monomer unit, an ethylene structure, a conjugated diene structure, and an α-olefin structure.

(Polymerization Example 26) Rubber-like Block Copolymer (Polymer 26)

A temperature-controllable autoclave having an internal capacity of 40 L and equipped with a stirrer and a jacket was used as a reactor, and the reactor was charged with 3,677 g of 1,3-butadiene, 624 g of styrene, and 25,800 g of cyclohexane, from which impurities had been precedently removed, and 3.10 g of tetrahydrofuran (THF) and 3.29 g of 2,2-bis(2-oxolanyl)propane used as polar substances, and the temperature within the reactor was kept at 35°C. Besides, as a polymerization initiator, 1.58 g of n-butyllithium was supplied to the reactor to start a polymerization reaction.

After starting the polymerization reaction, the temperature within the reactor started to increase due to heat generation through polymerization, and the temperature within the reactor finally reached 85°C. 2 minutes after reaching this reaction temperature peak, 2.25 g of 1,3-dimethyl-2-imidazolidinone was added to perform a modification reaction for 20 minutes. To the resultant polymer solution, 0.79 g of methanol was added as a reaction terminator, a part of the

thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 50 minutes, and thus, a rubber-like block copolymer (polymer 26) was obtained. The rubber-like block copolymer thus obtained (polymer 26) had an iodine value of 81.

To a solution of the thus obtained rubber-like block copolymer (polymer 26), 12.6 g of n-octadecyl-3-(3,5-dit-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 26) are shown in Table 3. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 26) was the following block II: Block II: A block having a content of a vinyl aromatic monomer unit of 80% by mass or less and containing the vinyl aromatic monomer unit, an ethylene structure, a conjugated diene structure, and an $\alpha$-olefin structure.

(Polymerization Example 27) Rubber-like Block Copolymer (Polymer 27)

A temperature-controllable autoclave having an internal capacity of 40 L and equipped with a stirrer and a jacket was used as a reactor, and the reactor was charged with 3,879 g of 1,3-butadiene, 335 g of styrene, and 25,800 g of cyclohexane, from which impurities had been precedently removed, and 3.10 g of tetrahydrofuran (THF) and 3.29 g of 2,2-bis(2-oxolanyl)propane used as polar substances, and the temperature within the reactor was kept at 35°C. Besides, as a polymerization initiator, 1.64 g of n-butyllithium was supplied to the reactor to start a polymerization reaction.

After starting the polymerization reaction, the temperature within the reactor started to increase due to heat generation through polymerization, and 5 minutes after monomer conversion within the reactor reached 99%, 86 g of styrene was added thereto to further perform a reaction.

The temperature within the reactor finally reached 83°C. 2 minutes after reaching this reaction temperature peak, 0.82 g of methanol was added as a reaction terminator, a part of the thus obtained rubber-like block copolymer solution before hydrogenation was extracted for analysis, and the resultant was desolvated with a dryer to obtain a rubber-like block copolymer before hydrogenation. The molecular weight of the aromatic vinyl monomer (styrene) block was measured by the above-described method.

Thereafter, to the rubber-like block copolymer solution before hydrogenation, the hydrogenation catalyst (TC-1) prepared in Production Example 1 was added in an amount, in terms of Ti, of 70 ppm per 100 parts by mass of the rubber-like block copolymer before hydrogenation, followed by a hydrogenation reaction at a hydrogen pressure of 0.8 MPa and an average temperature of 85°C for 50 minutes, and thus, a rubber-like block copolymer (polymer 27) was obtained. The rubber-like block copolymer thus obtained (polymer 27) had an iodine value of 100.

To a solution of the thus obtained rubber-like block copolymer (polymer 27), 12.6 g of n-octadecyl-3-(3,5-dit-butyl-4-hydroxyphenyl)-propionate and 3.0 g of 4,6-bis(octylthiomethyl)-o-cresol were added as antioxidants, and the resultant was subjected to a drying treatment. Analysis results of the rubber-like block copolymer (polymer 27) are shown in Table 3. A ratio between the polymer block (a) and the polymer block (b), and proportions (mass%) of respective components were calculated based on proportions (mass%) of the respective components in the rubber-like block copolymer, and the content of the styrene block in the rubber-like block copolymer.

At least one block at a molecular end in the rubber-like block copolymer (polymer 27) was the following block II: Block II: A block having a content of a vinyl aromatic monomer unit of 80% by mass or less and containing the vinyl aromatic monomer unit, an ethylene structure, a conjugated diene structure, and an $\alpha$-olefin structure.

(Method for Producing Molded Bale of Rubber-like Block Copolymer)

[Examples 1 to 20 and Comparative Examples 1 to 7]

The solutions of the respective rubber-like block copolymers obtained by the methods described above in Polymerization Examples 1 to 27 (polymers 1 to 27) were used to perform a drying treatment and molding specifically as described below to produce molded bales.

First, the solution of each rubber-like block copolymer was desolvated by a steam stripping method at a water temperature of 90°C with a 15 L mixing tank equipped with a stirrer (impeller rotation speed: 500 rpm) to obtain a water-containing crumb of the rubber-like block copolymer. The thus obtained water-containing crumb was subjected to a

drying treatment with a vacuum dryer at 80°C for 4 hours to obtain a dry crumb. Thereafter, 1,100 g of the obtained dry crumb in a state warmed at 80°C was filled in a molding mold having a size of 22 cm in length, 11 cm in width, and 15 cm in depth, and the resultant was compressed by applying a pressure of 10 MPa with a cylinder for 2 minutes to obtain a molded bale of the rubber-like block copolymer.

The residual solvent amount and the water content in the thus obtained molded bale, and cold flow resistance thereof were measured by the above-described methods. Measurement results are shown in Tables 1 to 3.

[Table 1]

| | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| | Polymer | | | Polymer 1 | Polymer 2 | Polymer 3 | Polymer 4 | Polymer 5 | Polymer 6 | Polymer 7 | Polymer 8 | Polymer 9 | Polymer 10 |
| Rubber-like Block Copolym er | Polymer Block (a) | Amount of Bound Styrene | mass% | 100 | 100 | 100 | 100 | 100 | 100 | 100 | 100 | 100 | 100 |
| | | Molecular Weight of Styrene Block | ten thousand | 1.0 | 0.7 | 0.7 | 1.5 | 0.8 | 0.4 | 2.3 | 1.0 | 1.0 | 2.5 |
| | | Ratio | mass% | 15 | 15 | 15 | 14 | 14 | 6 | 28 | 15 | 15 | 15 |
| | Polymer Block (b) | Amount of Bound Styrene | mass% | 11.6 | 11.6 | 11.6 | 36.0 | 36.0 | 3.9 | 19.4 | 11.8 | 11.6 | 11.7 |
| | | α-Olefin Content | mass% | 13.5 | 13.5 | 13.5 | 18.8 | 18.8 | 13.5 | 15.7 | 13.7 | 36.5 | 18.9 |
| | | Ethylene Structure | mass% | 65.2 | 63.2 | 61.8 | 41.3 | 40.3 | 60.3 | 51.3 | 23.4 | 10.1 | 25.3 |
| | | Conjugated Diene Structure | mass% | 9.7 | 11.6 | 13.1 | 3.9 | 4.9 | 22.3 | 13.6 | 51.1 | 41.7 | 44.0 |
| | | Ratio | mass% | 85 | 85 | 85 | 86 | 86 | 94 | 72 | 85 | 85 | 85 |
| | Weight Average Molecular Weight | | ten thousand | 11.5 | 15 | 14.5 | 16 | 17 | 11 | 12.5 | 11.5 | 11.5 | 28 |
| | Mooney Viscosity | | - | 97 | 130 | 122 | 85 | 120 | 101 | 84 | 81 | 76 | 145 |
| | Iodine Value | | I g/100g | 39.7 | 47.8 | 53.8 | 16.0 | 20.1 | 106.0 | 46.0 | 208.0 | 172.0 | 197.0 |
| | Amount of Bound Styrene | | mass% | 24.9 | 24.9 | 24.9 | 44.9 | 44.9 | 9.6 | 42.0 | 25.0 | 24.9 | 25.0 |
| | Ethylene Structure | | mass% | 55.4 | 53.8 | 52.5 | 35.5 | 34.7 | 56.7 | 37.0 | 19.9 | 8.6 | 21.5 |

(continued)

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| | Polymer | | Polymer 1 | Polymer 2 | Polymer 3 | Polymer 4 | Polymer 5 | Polymer 6 | Polymer 7 | Polymer 8 | Polymer 9 | Polymer 10 |
| | Conjugated Diene Structure | mass% | 8.2 | 9.9 | 11.1 | 3.3 | 4.2 | 20.9 | 9.8 | 43.4 | 35.5 | 37.4 |
| | α-Olefin Content | mass% | 11.5 | 11.5 | 11.5 | 16.2 | 16.2 | 12.7 | 11.3 | 11.7 | 31.1 | 16.1 |
| | Coupling Ratio | % | - | 72 | 69 | - | 67 | - | - | - | - | - |
| | Peak Area on Lowest Molecular Weight Side | % | - | 28 | 31 | - | 33 | - | - | - | - | - |
| | Number of Peaks | - | 1 | 2 | 2 | 1 | 2 | 1 | 1 | 1 | 1 | 1 |
| | Modification Ratio | % | - | - | 75 | - | 75 | - | - | - | - | - |
| | BS/TS | - | 0.60 | 0.60 | 0.60 | 0.31 | 0.31 | 0.62 | 0.67 | 0.60 | 0.60 | 0.60 |
| Molded Bale | Residual Solvent Amount | ppm | 320 | 250 | 250 | 640 | 410 | 230 | 870 | 830 | 790 | 720 |
| | Water Content | mass% | 0.3 | 0.2 | 0.2 | 0.55 | 0.45 | 0.1 | 0.9 | 0.8 | 0.75 | 0.65 |
| | Cold Flow Resistance | % | ◎ | ◎ | ◎ | ◎ | ◎ | ○ | ◎ | ◎ | ◎ | ◎ |

[Table 2]

| | | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|---|
| | | Polymer | | Polymer 11 | Polymer 12 | Polymer 13 | Polymer 14 | Polymer 15 | Polymer 16 | Polymer 17 | Polymer 18 | Polymer 19 | Polymer 20 |
| Rubber-like Block Copolymer | Polymer Block (a) | Amount of Bound Styrene | mass% | 100 | 100 | 100 | 100 | 100 | 100 | 100 | 100 | 100 | 100 |
| | | Molecular Weight of Styrene Block | ten thousand | 1.1 | 2.2 | 1.1 | 1.2 | 1.2 | 0.5 | 0.5 | 1.1 | 1.1 | 1.1 |
| | | Ratio | mass% | 15 | 25 | 6 | 6 | 6 | 3 | 3 | 6 | 6 | 6 |
| | Polymer Block (b) | Amount of Bound Styrene | mass% | 0.0 | 0.0 | 8.6 | 8.6 | 8.6 | 8.1 | 8.1 | 8.6 | 8.6 | 8.6 |
| | | $\alpha$-Olefin Content | mass% | 13.6 | 13.6 | 41.3 | 51.5 | 61.5 | 41.3 | 41.3 | 41.3 | 41.3 | 41.3 |
| | | Ethylene Structure | mass% | 55.4 | 55.4 | 29.9 | 19.8 | 9.9 | 29.9 | 29.9 | 29.9 | 29.9 | 29.9 |
| | | Conjugated Diene Structure | mass% | 31.1 | 31.1 | 20.2 | 20.1 | 20.0 | 20.7 | 20.7 | 20.2 | 20.2 | 20.2 |
| | | Ratio | mass% | 85 | 75 | 94 | 94 | 94 | 97 | 97 | 94 | 94 | 94 |
| | | Weight Average Molecular Weight | ten thousand | 14 | 15 | 32 | 32 | 31.5 | 32 | 32 | 32 | 33 | 31 |
| | | Mooney Viscosity | - | 144 | 132 | 114 | 107 | 96 | 120 | 122 | 114 | 119 | 121 |
| | | iodine Value | I g/100g | 128 | 113 | 94 | 95 | 97 | 97 | 98 | 94 | 94 | 92 |
| | | Amount of Bound Styrene | mass% | 15.0 | 25.0 | 14.1 | 14.1 | 14.1 | 10.8 | 10.8 | 14.1 | 14.1 | 14.1 |

(continued)

| | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|
| | Polymer | | Polymer 11 | Polymer 12 | Polymer 13 | Polymer 14 | Polymer 15 | Polymer 16 | Polymer 17 | Polymer 18 | Polymer 19 | Polymer 20 |
| Molded Bale | Ethylene Structure | mass% | 47.1 | 41.5 | 28.1 | 18.7 | 9.3 | 29.0 | 29.0 | 28.1 | 28.1 | 28.1 |
| | Conjugated Diene Structure | mass% | 26.4 | 23.3 | 19.0 | 18.9 | 18.8 | 20.1 | 20.1 | 19.0 | 19.0 | 19.0 |
| | α-Olefin Content | mass% | 11.5 | 10.2 | 38.8 | 48.4 | 57.8 | 40.1 | 40.1 | 38.8 | 38.8 | 38.8 |
| | Coupling Ratio | % | - | - | - | - | - | - | - | - | - | - |
| | Peak Area on Lowest Molecular Weight Side | % | - | - | - | - | - | - | - | - | - | - |
| | Number of Peaks | - | 1 | 1 | 1 | 1 | 1 | 1 | 1 | 1 | 1 | 1 |
| | Modification Ratio | % | - | - | - | - | - | - | 75 | 50 | 73 | 80 |
| | BS/TS | - | 1.00 | 1.00 | 0.42 | 0.42 | 0.42 | 0.28 | 0.28 | 0.42 | 0.42 | 0.42 |
| | Residual Solvent Amount | ppm | 750 | 890 | 650 | 630 | 600 | 680 | 690 | 600 | 620 | 580 |
| | Water Content | mass% | 0.65 | 0.7 | 0.5 | 0.5 | 0.45 | 0.55 | 0.55 | 0.5 | 0.5 | 0.45 |
| | Cold Flow Resistance | % | ◎ | ◎ | ○ | ○ | ○ | ○ | ○ | ○ | ○ | ○ |

[Table 3]

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| | Polymer | | Polymer 21 | Polymer 22 | Polymer 23 | Polymer 24 | Polymer 25 | Polymer 26 | Polymer 27 |
| Rubber-like Block Copolymer — Polymer Block (a) | Amount of Bound Styrene | mass% | 100 | 100 | 100 | 0 | 100 | 0 | 100 |
| | Molecular Weight of Styrene Block | ten thousand | 1.0 | 2.9 | 1.5 | 0 | 0.7 | 0 | 0.4 |
| | Ratio | mass% | 15 | 34 | 14 | 0 | 15 | 0 | 2 |
| Polymer Block (b) | Amount of Bound Styrene | mass% | 12.0 | 14.5 | 37.0 | 27.1 | 12.0 | 13.9 | 7.7 |
| | α-Olefin Content | mass% | 0 | 16.7 | 0 | 41.6 | 0 | 39 | 41 |
| | Ethylene Structure | mass% | 0 | 53.3 | 0 | 10.0 | 0 | 30 | 30 |
| | Conjugated Diene Structure | mass% | 75.0 | 15.5 | 45.0 | 21.3 | 75.0 | 16.8 | 21.1 |
| | Ratio | mass% | 85 | 66 | 86 | 100 | 85 | 100 | 98 |
| | Weight Average Molecular Weight | ten thousand | 11.5 | 12.5 | 16 | 13 | 14.5 | 30.2 | 32 |
| | Mooney Viscosity | - | 47 | 104 | 45 | 85 | 68 | 121 | 129 |
| | iodine Value | I g/100g | 352 | 49 | 255 | 101 | 352 | 81 | 100 |
| | Amount of Bound Styrene | mass% | 25.2 | 43.6 | 45.8 | 27.1 | 25.2 | 13.9 | 9.5 |
| | Ethylene Structure | mass% | 0.0 | 35.2 | 0.0 | 10.0 | 0.0 | 29.9 | 29.3 |
| | Conjugated Diene Structure | mass% | 63.8 | 10.2 | 38.7 | 21.3 | 63.8 | 16.8 | 20.7 |

(continued)

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| | Polymer | | Polymer 21 | Polymer 22 | Polymer 23 | Polymer 24 | Polymer 25 | Polymer 26 | Polymer 27 |
| Molded Bale | α-Olefin Content | mass% | 0 | 11.0 | 0 | 41.6 | 0 | 39 | 40 |
| | Coupling Ratio | % | - | - | - | - | 68 | - | - |
| | Peak Area on Lowest Molecular Weight Side | % | - | - | - | - | 32 | - | - |
| | Number of Peaks | - | 1 | 1 | 1 | 1 | 2 | 1 | 1 |
| | Modification Ratio | % | - | - | - | - | 75 | 77 | - |
| | BS/TS | - | 0.60 | 0.78 | 0.31 | 0.00 | 0.60 | 0.00 | 0.21 |
| | Residual Solvent Amount | ppm | 920 | 1350 | 950 | 350 | 890 | 320 | 400 |
| | Water Content | mass% | 0.90 | 1.10 | 0.95 | 0.40 | 0.85 | 0.30 | 0.45 |
| | Cold Flow Resistance | % | ○ | ○ | ○ | × | ○ | △ | △ |

[Application Examples 1 to 12 and Application Comparative Examples 1 to 5]

(Preparation of Rubber Composition, and Evaluation of Properties]

The rubber-like block copolymers obtained in Polymerization Examples 1 to 12 and 21 to 25 (polymers 1 to 12, and 21 to 25) shown in Tables 1 to 3, and a baleshaped polybutadiene rubber were used as raw material rubber components to obtain rubber compositions containing the respective raw material rubber components by kneading the respective raw materials by the following method in accordance with the following compounding conditions 1. Properties of the thus obtained rubber compositions were evaluated by the following methods. Evaluation results are shown in Table 5.

(Compounding Conditions 1)

The amount of each compounding agent to be added was expressed in parts by mass based on 100 parts by mass of the rubber component excluding a rubber softener. Compounding ratios of the respective raw materials are shown in Table 4.

[Table 4]

| Raw Materials | parts by mass |
|---|---|
| Rubber-like Block Copolymer | 35 |
| Polybutadiene Rubber (*1) | 65 |
| Silica (*2) | 30 |
| Silane Coupling Agent (*3) | 5 |
| Zinc Powder | 7.5 |
| Stearic Acid | 2.0 |
| Anti-aging Agent (*4) | 2.5 |
| Sulfur | 2 |
| Vulcanization Accelerator 1 (*5) | 2 |
| Vulcanization Accelerator 2 (*6) | 1.7 |

(*1) UBEPOL 150 manufactured by UBE Corporation
(*2) ULTRASILVN3 manufactured by Degussa
(*3) Silane Coupling Agent (trade name "Si69" manufactured by Evonik Degussa, bis(triethoxysilylpropyl)disulfide)
(*4) Anti-aging Agent (N-(1,3-dimethylbutyl)-N'-phenyl-p-phenylenediamine)
(*5) Vulcanization Accelerator 1 (N-cyclohexyl-2-benzothiazylsulfinamide)
(*6) Vulcanization Accelerator 2 (diphenylguanidine)

(Kneading Method)

The above-described materials were kneaded as follows to obtain a rubber composition. A closed kneader (having an internal capacity of 0.3 L) equipped with a temperature controller was used to knead, as first stage kneading, the rubber-like block copolymer (one of the polymers 1 to 15), the polybutadiene rubber, the filler (silica), the silane coupling agent, zinc powder and stearic acid under conditions of a filling rate of 65% and a rotor speed of 30 to 50 rpm to obtain each compound. Here, the temperature of the closed mixer was controlled to obtain a discharge temperature of 155 to 160°C.

Next, as second stage kneading, after the compound obtained as described above was cooled to room temperature, the anti-aging agent was added thereto, and the resultant was kneaded again for improving dispersibility of the silica. Also in this case, the discharge temperature of the compound was adjusted to 155 to 160°C by the temperature control of the mixer. After cooling, as third stage kneading, the resultant was kneaded with sulfur and the vulcanization accelerators 1 and 2 added thereto with an open roll set to 70°C to obtain a rubber composition. Thereafter, the resultant rubber composition was molded, and vulcanized with a vulcanization press at 160°C for 20 minutes to obtain a rubber composition after vulcanization.

(Method for Evaluating Properties of Rubber Composition)

The rubber composition before vulcanization and the rubber composition after vulcanization were evaluated. Specifically, the evaluations were performed by the following methods.

(Evaluation 1) Processability (Mooney Viscosity)

The rubber composition before vulcanization obtained as described above was used as a sample to measure a Mooney viscosity in accordance with JIS K6300-1 after preheating the sample at 130°C for 1 minute, and after rotating a rotor for 4 minutes at 2 rpm. Each measured value was shown as an index obtained assuming that a result of the rubber composition of Application Comparative Example 1 was 100. A larger index indicates more favorable processability, and it was evaluated that the rubber composition had no problem in practical use when the index was 80 or more.

(Evaluation 2) Rigidity (Viscoelasticity Parameter)

The rubber composition after vulcanization obtained as described above was used as a sample to measure a viscoelasticity parameter with a viscoelasticity tester "ARES" manufactured by Rheometric Scientific in a twist mode. Each measured value was shown as an index obtained assuming that a result of the rubber composition of Application Comparative Example 1 was 100.

A storage modulus (G') measured at 50°C at a frequency of 10 Hz and strain of 3% was used as an index of rigidity. A larger index indicates more favorable rigidity.

(Evaluation 3) Break Strength (Tensile Strength)

The rubber composition after vulcanization obtained as described above was used as a sample to measure tensile strength in accordance with a tensile test method of JIS K6251. Each measured value was shown as an index obtained assuming that a result of the rubber composition of Application Comparative Example 1 was 100. A larger index indicates more favorable tensile strength and more excellent break strength.

(Evaluation 4) Abrasion Resistance

The rubber composition after vulcanization obtained as described above was used as a sample to measure abrasion resistance with a DIN abrasion tester (manufactured by Ueshima Seisakusho Co., Ltd.) in accordance with a DIN abrasion test method of JIS K6246-2. Each measured value was shown as an index obtained assuming that a result of the rubber composition of Application Comparative Example 1 was 100. A larger index indicates more favorable abrasion resistance.

[Table 5]

| | Application Example 1 | Application Example 2 | Application Example 3 | Application Example 4 | Application Example 5 | Application Example 6 | Application Example 7 | Application Example 8 | Application Example 9 |
|---|---|---|---|---|---|---|---|---|---|
| Rubber-like Block Copolymer | Polymer 1 | Polymer 2 | Polymer 3 | Polymer 4 | Polymer 5 | Polymer 6 | Polymer 7 | Polymer 8 | Polymer 9 |
| Processability | 90 | 84 | 82 | 93 | 88 | 86 | 82 | 94 | 96 |
| Rigidity | 110 | 108 | 112 | 113 | 116 | 102 | 113 | 105 | 103 |
| Break Strength | 114 | 111 | 117 | 106 | 109 | 108 | 107 | 108 | 105 |
| Abrasion Resistance | 112 | 118 | 121 | 109 | 112 | 107 | 109 | 107 | 105 |

| | Application Example 10 | Application Example 11 | Application Example 12 | Application Comparative Example 1 | Application Comparative Example 2 | Application Comparative Example 3 | Application Comparative Example 4 | Application Comparative Example 5 |
|---|---|---|---|---|---|---|---|---|
| Rubber-like Block Copolymer | Polymer 10 | Polymer 11 | Polymer 12 | Polymer 21 | Polymer 22 | Polymer 23 | Polymer 24 | Polymer 25 |
| Processability | 80 | 90 | 83 | 100 | 75 | 104 | 106 | 95 |
| Rigidity | 111 | 105 | 109 | 100 | 108 | 102 | 93 | 97 |
| Break Strength | 119 | 115 | 120 | 100 | 105 | 95 | 90 | 100 |
| Abrasion Resistance | 123 | 103 | 105 | 100 | 105 | 96 | 88 | 102 |

[Application Examples 13 and 14 and Application Comparative Example 6]

(Preparation of Rubber Composition, and Evaluation of Properties)

The rubber-like block copolymers obtained in Polymerization Examples 5, 19 and 23 (polymers 5, 19 and 23) shown in Tables 1 to 3 were used as raw material rubber components to obtain rubber compositions containing the respective raw material rubber components by kneading the respective raw materials by the following method in accordance with the following compounding condition 2. Properties of the thus obtained rubber compositions were evaluated by the same methods as described above except that each measured value was shown as an index obtained assuming that a result of the rubber composition of Application Comparative Example 6 was 100. Evaluation results are shown in Table 7.

(Compounding Conditions 2)

The amount of each compounding agent to be added was expressed in parts by mass based on 100 parts by mass of the rubber component excluding a rubber softener. Compounding ratios of the respective raw materials are shown in Table 6.

[Table 6]

| Raw Materials | parts by mass |
|---|---|
| Rubber-like Block Copolymer | 100 |
| Silica (*7) | 75 |
| Carbon Black (*8) | 5 |
| Silane Coupling Agent (*9) | 7.5 |
| Process Oil (*10) | 37.5 |
| Zinc Powder | 2.5 |
| Stearic Acid | 2 |
| Anti-aging Agent (*4) | 2 |
| Sulfur | 1.7 |
| Vulcanization Accelerator 1 (*5) | 1.7 |
| Vulcanization Accelerator 2 (*6) | 1.5 |

(*7) Silica (trade name "Ultrasil 7000GR" manufactured by Evonik Degussa, nitrogen adsorption specific surface area: 170 $m^2/g$)
(*8) Carbon Black (trade name "Seast KH (N339)" manufactured by Tokai Carbon Co., Ltd.)
(*9) Silane Coupling Agent (trade name "Si75" manufactured by Evonik Degussa, bis(triethoxysilylpropyl)disulfide)
(*10) S-RAE Oil (trade name "Process NC140" manufactured by JX Nippon Oil & Energy Corporation): 37.5 parts by mass
(*4) Anti-aging Agent (N-(1,3-dimethylbutyl)-N'-phenyl-p-phenylenediamine)
(*5) Vulcanization Accelerator 1 (N-cyclohexyl-2-benzothiazylsulfinamide)
(*6) Vulcanization Accelerator 2 (diphenylguanidine)

(Kneading Method)

The above-described materials were kneaded as follows to obtain a rubber composition. A closed kneader (having an internal capacity of 0.3 L) equipped with a temperature controller was used to knead, as first stage kneading, the rubber-like block copolymer (the polymer 5 or 13), the filler (silica and carbon black), the silane coupling agent, the process oil, zinc powder and stearic acid under conditions of a filling rate of 65% and a rotor speed of 30 to 50 rpm to obtain each compound. Here, the temperature of the closed mixer was controlled to obtain a discharge temperature of 155 to 160°C.
Next, as second stage kneading, after the compound obtained as described above was cooled to room temperature, the anti-aging agent was added thereto, and the resultant was kneaded again for improving dispersibility of

the silica. Also in this case, the discharge temperature of the compound was adjusted to 155 to 160°C by the temperature control of the mixer. After cooling, as third stage kneading, the resultant was kneaded with sulfur and the vulcanization accelerators 1 and 2 added thereto with an open roll set to 70°C. Thereafter, the resultant rubber composition was molded, and vulcanized with a vulcanization press at 160°C for 20 minutes to obtain a rubber composition after vulcanization.

[Table 7]

| | Application Example 13 | Application Example 14 | Application Comparative Example 6 |
|---|---|---|---|
| Rubber-like Block Copolymer | Polymer 5 | Polymer 19 | Polymer 23 |
| Processability | 95 | 90 | 100 |
| Rigidity | 108 | 105 | 100 |
| Break Strength | 105 | 104 | 100 |
| Abrasion Resistance | 106 | 102 | 100 |

[Application Examples 15 to 23 and Application Comparative Examples 7 to 9]

(Preparation of Rubber Composition, and Evaluation of Properties)

The rubber-like block copolymers obtained in Polymerization Examples 4, and 13 to 20 (polymers 4, and 13 to 20) and the rubber-like block copolymers obtained in Polymerization Examples 23, 26 and 27 (polymers 23, 26 and 27) shown in Tables 1 to 3 were used as raw material rubber components to obtain rubber compositions containing the respective raw material rubber components by kneading the respective raw materials by the following method in accordance with the following compounding conditions 3. Properties of the thus obtained rubber compositions were evaluated by the same methods as described above except that each measured value was shown as an index obtained assuming that a result of the rubber composition of Application Comparative Example 7 was 100, and by evaluation methods 5 and 6 described below. Evaluation results are shown in Table 9.

(Compounding Conditions 3)

The amount of each compounding agent to be added was expressed in parts by mass based on 100 parts by mass of the rubber component excluding a rubber softener. Compounding ratios of the respective raw materials are shown in Table 8.

[Table 8]

| Raw Materials | parts by mass |
|---|---|
| Rubber-like Block Copolymer | 30 |
| Natural Rubber (*11) | 40 |
| Polybutadiene Rubber (*1) | 30 |
| Carbon Black (*12) | 50 |
| Process Oil (*10) | 10 |
| Zinc Powder | 3 |
| Stearic Acid | 2 |
| Wax (*13) | 1.5 |
| Anti-aging Agent (*4) | 3 |
| Sulfur | 1.5 |

(continued)

| Raw Materials | parts by mass |
|---|---|
| Vulcanization Accelerator 1 (*15) | 1.7 |
| (*11) RSS No.3 (manufacturer: UNIMAC RUBBER CO., LTD. (Thailand))<br>(*1) UBEPOL 150 manufactured by UBE Corporation<br>(*12) Carbon Black (trade name "Seast SO (FEF)" manufactured by Tokai Carbon Co., Ltd.)<br>(*10) S-RAE Oil (trade name "Process NC140" manufactured by JX Nippon Oil & Energy Corporation)<br>(*13) Wax (trade name "SUN NOC" manufactured by Ouchi Shinko Chemical Industrial Co., Ltd.)<br>(*4) Anti-aging Agent (N-(1,3-dimethylbutyl)-N'-phenyl-p-phenylenediamine)<br>(*15) Accelerator TBBS (N-tert-butylbenzothiazole-2-sulphenamide) (trade name "Sanceler NS-G" manufactured by Sanshin Chemical Industry Co., Ltd.) | |

(Kneading Method)

The above-described materials were kneaded as follows to obtain a rubber composition. A closed kneader (having an internal capacity of 0.3 L) equipped with a temperature controller was used to knead, as first stage kneading, the rubber component (the rubber-like block copolymer, the natural rubber, and the polybutadiene rubber), the filler (carbon black), the process oil, stearic acid, the anti-aging agent, and the wax under conditions of a filling rate of 65% and a rotor speed of 50 to 90 rpm to obtain each compound. Here, the temperature of the closed mixer was controlled to obtain a discharge temperature of 155 to 160°C.

Next, as second stage kneading, after the compound obtained as described above was cooled to room temperature, the resultant was kneaded again for improving dispersibility of the silica. Also in this case, the discharge temperature of the compound was adjusted to 155 to 160°C by the temperature control of the mixer. After cooling, as third stage kneading, the resultant was kneaded with zinc powder, the vulcanization accelerator, and sulfur added thereto with an open roll set to 70°C. Thereafter, the resultant rubber composition was molded, and vulcanized with a vulcanization press at 160°C for 20 minutes to obtain a rubber composition after vulcanization.

(Evaluation 5) Fuel Economy

The vulcanized rubber composition obtained as described above was used as a sample to measure a viscoelasticity parameter with a viscoelasticity tester "ARES" manufactured by Rheometric Scientific in a twist mode.

A tan $\delta$ measured at 50°C at a frequency of 10 Hz and strain of 3% was used as an index of fuel economy.

Respective measured values were used to show measurement results together. Each measured value was shown as an index obtained assuming that a result of the rubber composition of Application Comparative Example 7 was 100. A larger index indicates more excellent fuel economy.

(Evaluation 6) Ozone Resistance

The vulcanized rubber composition obtained as described above was used to measure ozone resistance by the following test method.

<Evaluation of Ozone Resistance>

A strip-shaped sample (6 cm in length × 1 cm in width × 2.0 mm in thickness) was punched out from a vulcanized rubber sheet obtained by vulcanization press with a prescribed mold (15 cm in length × 15 cm in width × 2.0 mm in thickness) under conditions of 160°C for 15 to 30 minutes, and the sample was put in an ozone tank (50°C, 100 pphm) and allowed to stand still therein for 48 hours in a state stretched by 40%. Thereafter, the strip-shaped sample (vulcanized rubber sheet) was observed to count the number of cracks having a length of 1 mm or more present on the surface. The evaluation was performed in accordance with the following criteria. Evaluation results are shown in Table 9 (Ozone Resistance).

[Criteria]

×: The vulcanized rubber sheet ruptured.
△: The number of cracks of 1 mm or larger was 21 or more.
○: The number of cracks of 1 mm or larger was 10 or more and 20 or less.
◎: The number of cracks of 1 mm or larger was less than 10.

[Table 9]

| | Application Example 15 | Application Example 16 | Application Example 17 | Application Example 18 | Application Example 19 | Application Example 20 | Application Example 21 | Application Example 22 | Application Example 23 | Application Comparative Example 7 | Application Comparative Example 8 | Application Comparative Example 9 |
|---|---|---|---|---|---|---|---|---|---|---|---|---|
| Rubber-like Block Copolymer | Polymer 4 | Polymer 13 | Polymer 14 | Polymer 15 | Polymer 16 | Polymer 17 | Polymer 18 | Polymer 19 | Polymer 20 | Polymer 23 | Polymer 26 | Polymer 27 |
| Processability | 95 | 88 | 91 | 93 | 88 | 89 | 90 | 92 | 89 | 100 | 90 | 93 |
| Rigidity | 110 | 107 | 107 | 105 | 105 | 103 | 106 | 103 | 102 | 100 | 98 | 102 |
| Break Strength | 110 | 106 | 107 | 103 | 105 | 106 | 104 | 105 | 103 | 100 | 95 | 98 |
| Abrasion Resistance | 108 | 103 | 106 | 104 | 103 | 102 | 105 | 104 | 103 | 100 | 94 | 96 |
| Ozone Resistance | ◎ | ○ | △ | △ | ○ | ○ | ○ | ○ | ○ | × | ○ | ○ |
| Fuel Economy | 103 | 100 | 98 | 97 | 97 | 115 | 112 | 117 | 110 | 100 | 110 | 98 |

It was confirmed, as shown in Tables 5, 7, and 9, that the rubber composition of Application Examples 1 to 23 are superior in balance among processability, rigidity, break strength, and abrasion resistance to the rubber compositions of Application Comparative Examples 1 to 9.

This application is based upon Japanese Patent Application filed on September 28, 2020 (Japanese Patent Application No. 2020-161660), the entire contents of which are incorporated herein by reference.

Industrial Applicability

A molded bale of a rubber-like block copolymer of the present invention is applicable in the fields of automobile tires, shoes, anti-vibration rubbers, and the like.

## Claims

**1.** A molded bale of a rubber-like block copolymer, satisfying the following requirements 1 to 6:

Requirement 1: a content of a vinyl aromatic monomer unit is 9% by mass or more and 50% by mass or less;
Requirement 2: a proportion of a vinyl aromatic monomer block is 3% by mass or more and less than 30% by mass;
Requirement 3: an iodine value is 3 to 250;
Requirement 4: a proportion of an ethylene structure is 3% by mass or more;
Requirement 5: a weight average molecular weight is in a range of 80,000 to 1,000,000; and
Requirement 6: at least one block at a molecular end is the following block I or block II:

Block I: a block containing an ethylene structure, a conjugated diene structure, and an $\alpha$-olefin structure; and
Block II: a block having a content of a vinyl aromatic monomer unit of 80% by mass or less and containing the vinyl aromatic monomer unit, an ethylene structure, a conjugated diene structure, and an $\alpha$-olefin structure.

**2.** The molded bale according to claim 1, wherein a content of the $\alpha$-olefin structure in the rubber-like block copolymer is 10% by mass or more.

**3.** The molded bale according to claim 1 or 2, wherein the number of vinyl aromatic monomer blocks in the rubber-like block copolymer is 1.

**4.** The molded bale according to any one of claims 1 to 3, wherein the rubber-like block copolymer contains a nitrogen atom.

**5.** The molded bale according to any one of claims 1 to 4, wherein a modification ratio measured by column adsorption GPC is 40% by mass or more in the rubber-like block copolymer.

**6.** The molded bale according to any one of claims 1 to 5, wherein the number of peaks in a gel permeation chromatography (GPC) curve of the rubber-like block copolymer is 1.

**7.** The molded bale according to any one of claims 1 to 5, wherein the number of peaks in a gel permeation chromatography (GPC) curve of the rubber-like block copolymer is 2 or more, and a peak area of a peak having a lowest molecular weight is 5% or more and less than 95% of a total peak area.

**8.** The molded bale according to any one of claims 1 to 7, wherein a content of the $\alpha$-olefin structure in the rubber-like block copolymer is 40% by mass or less.

**9.** The molded bale according to any one of claims 1 to 8, wherein a ratio between a proportion of the vinyl aromatic monomer block and a content of the vinyl aromatic monomer unit in the rubber-like block copolymer (the proportion of the vinyl aromatic monomer block/the content of the vinyl aromatic monomer unit) is 0.28 to 1.00.

**10.** The molded bale according to any one of claims 1 to 9, wherein a weight average molecular weight of the vinyl aromatic monomer block in the rubber-like block copolymer is 10,000 or more.

**11.** The molded bale of a rubber-like block copolymer according to any one of claims 1 to 10, wherein a residual solvent

amount is 5,000 ppm or less, and a water content is 0.05 to 1.5% by mass or less in the molded bale of the rubber-like block copolymer.

**12.** A method for producing the molded bale according to any one of claims 1 to 11, comprising:

a step of polymerizing at least a vinyl aromatic monomer and a conjugated diene monomer with an organolithium compound used as a polymerization initiator to obtain a rubber-like block copolymer;
a step of hydrogenating the rubber-like block copolymer to obtain a hydrogenated product of the rubber-like block copolymer; and
a step of molding the hydrogenated product of the rubber-like block copolymer to obtain a molded bale.

**13.** The method for producing the molded bale according to claim 12, comprising a step of adding a vinyl aromatic monomer after copolymerizing a vinyl aromatic monomer and a conjugated diene monomer or after polymerizing a conjugated diene monomer.

**14.** The method for producing the molded bale according to claim 12 or 13, comprising a step of coupling the rubber-like block copolymer using a coupling agent.

**15.** A method for producing a rubber composition, comprising a step of kneading a rubber component containing the molded bale of a rubber-like block copolymer according to any one of claims 1 to 11, and 0.1 parts by mass or more and 20 parts by mass or less of a crosslinking agent based on 100 parts by mass of the rubber component.

**16.** The method for producing the rubber composition according to claim 15, wherein the crosslinking agent is at least one selected from the group consisting of an organic peroxide, an azo compound, and a sulfur compound.

**17.** The method for producing the rubber composition according to claim 15 or 16, wherein a filler is kneaded in the step of kneading a crosslinking agent.

**18.** The method for producing the rubber composition according to any one of claims 15 to 17, wherein the rubber component contains an additional rubber component in addition to the rubber-like block copolymer.

**19.** The method for producing the rubber composition according to claim 18, wherein the additional rubber component is at least one selected from the group consisting of a polybutadiene rubber, a natural rubber, and an ethylene-vinyl acetate copolymer.

**20.** A method for producing a shoe sole, comprising a step of molding the rubber composition obtained by the method according to any one of claims 15 to 19.

**21.** A method for producing a tire tread, comprising a step of molding the rubber composition obtained by the method according to any one of claims 15 to 19.

**22.** A method for producing a tire sidewall, comprising a step of molding the rubber composition obtained by the method according to any one of claims 15 to 19.

## INTERNATIONAL SEARCH REPORT

International application No. **PCT/JP2021/035618**

### A. CLASSIFICATION OF SUBJECT MATTER

***B60C 1/00***(2006.01)i; ***C08F 8/04***(2006.01)i; ***C08F 297/00***(2006.01)i; ***C08F 297/04***(2006.01)i; ***C08L 53/02***(2006.01)i; ***C08K 3/36***(2006.01)i

FI: C08F297/00; C08F8/04; C08F297/04; C08K3/36; C08L53/02; B60C1/00 A

According to International Patent Classification (IPC) or to both national classification and IPC

### B. FIELDS SEARCHED

Minimum documentation searched (classification system followed by classification symbols)

B60C1/00; C08F8/04; C08F297/00; C08F297/04; C08L53/02; C08K3/36

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2008-019392 A (JAPAN ELASTOMER CO., LTD.) 31 January 2008 (2008-01-31)<br>paragraphs [0051]-[0053], [0057] | 1-3, 6, 8-13 |
| X | WO 2020/162304 A1 (SUMITOMO RUBBER INDUSTRIES, LTD.) 13 August 2020 (2020-08-13)<br>claims, paragraphs [0042]-[0043], [0045]-[0050], [0054]-[0062], [0134]-[0135] | 1-12, 14 |
| A | JP 2020-041136 A (ASAHI KASEI CORP.) 19 March 2020 (2020-03-19)<br>entire text | 1-22 |
| A | WO 2018/062192 A1 (KURARAY CO., LTD.) 05 April 2018 (2018-04-05)<br>entire text | 1-22 |
| A | JP 2014-105238 A (SUMITOMO RUBBER INDUSTRIES, LTD.) 09 June 2014 (2014-06-09)<br>entire text | 1-22 |
| E, X | WO 2021/206068 A1 (ASAHI KASEI CORP.) 14 October 2021 (2021-10-14)<br>examples, comparative examples 1, 5-8 | 1-5, 7-12, 14-22 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 November 2021** | **07 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/035618**

| Patent document cited in search report | Publication date (day/month/year) | Patent family member(s) | Publication date (day/month/year) |
|---|---|---|---|
| JP 2008-019392 A | 31 January 2008 | (Family: none) | |
| WO 2020/162304 A1 | 13 August 2020 | (Family: none) | |
| JP 2020-041136 A | 19 March 2020 | CN 110878151 A<br>entire text | |
| WO 2018/062192 A1 | 05 April 2018 | US 2020/0024441 A1<br>entire text<br>EP 3521365 A1<br>CN 109790355 A | |
| JP 2014-105238 A | 09 June 2014 | (Family: none) | |
| WO 2021/206068 A1 | 14 October 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010270314 A
- WO 2019151126 A
- WO 2019151127 A
- WO 2019078083 A
- WO 2014133097 A
- WO 2019111496 A
- WO 2019142501 A
- WO 2019171679 A
- WO 2019216100 A
- WO 96005250 A
- JP 2000053706 A
- WO 2003085010 A
- WO 2002002663 A
- WO 2015006179 A
- JP 10168101 A
- JP 10204136 A
- WO 2013146530 A
- JP 2019131810 A
- JP 2020161660 A

### Non-patent literature cited in the description

- **I. M. KOLTHOFF et al.** *J. Polym. Sci,* 1946, vol. 1, 429